# EUROPEAN PATENT APPLICATION

(11) **EP 3 876 175 A1**
(43) Date of publication of application: **08.09.2021**
(21) Application number: 21156393.7
(22) Date of filing: 10.02.2021
(51) Int. Cl.: G06Q 20/32, G07G 1/00

(54) **TRANSACTION PROCESSING SYSTEM AND METHOD**

(30) Priority: 06.03.2020 JP 2020038422
(71) Applicant: Toshiba TEC Kabushiki Kaisha, Tokyo 141-8562 (JP)
(72) Inventor: Adachi, Kazunobu, Shinagawa-ku, Tokyo 141-8562 (JP)
(74) Representative: Bandpay & Greuter

(57) **Abstract**

In an embodiment, a transaction processing system includes a first wireless terminal in which payment information associated with a customer is stored and a shopping cart with a code reader and a second wireless terminal. The second wireless terminal is configured to transmit a commodity code read by the code reader to a server system to generate, on the server system, a shopping list including the commodity code. The second wireless terminal receives, from the server system, payment amount data indicating a total payment amount due for purchase of commodities on the shopping list and then transmits a settlement instruction along with the payment amount data to the first wireless terminal so the first wireless terminal can perform a settlement operation with a settlement server using the payment information stored in the first wireless terminal.

## Description

### FIELD

Embodiments described herein relate generally to a transaction processing system, a mobile terminal for use in a transaction processing system, and a transaction processing method utilizing a transaction processing system.

### BACKGROUND

As a transaction processing system that registers contents of a transaction based on customer's operations of a terminal apparatus, for example, a cart point-of-sales (POS) system has been proposed.

In this cart POS system, when a settlement method such as credit card settlement or barcode-based voucher settlement is used, a settlement process can be completed in accordance with a customer's operation on the terminal apparatus. By completing the settlement this way, the transaction can be completed without involvement of a store clerk.

However, since the terminal apparatus is commonly used by many customers, customers may feel reluctant to input settlement data such as credit card data via the terminal apparatus for security reasons. Therefore, it is desirable to complete settlement without specifically requiring the input of settlement data via the terminal apparatus.

### DESCRIPTION OF THE DRAWINGS

FIG. 1 is a block diagram illustrating a schematic configuration of a transaction processing system according to an embodiment.
FIG. 2 is a block diagram illustrating a configuration of a shop server.
FIG. 3 is a block diagram illustrating a configuration of a virtual POS server.
FIG. 4 is a block diagram illustrating a configuration of a mobile controller.
FIG. 5 is a schematic diagram illustrating a data structure of a data record in a transaction management database.
FIG. 6 is a schematic diagram illustrating a data structure of a data record in a registration database.
FIG. 7 is a block diagram illustrating a configuration of a user terminal.
FIG. 8 is a block diagram illustrating a configuration of a cart terminal.
FIG. 9 is a flowchart illustrating aspects of user interface (UI) processing.
FIG. 10 is a flowchart illustrating aspects of user interface (UI) processing.
FIG. 11 is a flowchart illustrating aspects of user interface (UI) processing.
FIG. 12 is a diagram illustrating a guide screen.
FIG. 13 is a flowchart illustrating a membership certificate process.
FIG. 14 is a flowchart illustrating aspects of a relay process.
FIG. 15 is a flowchart illustrating aspects of a relay process.
FIG. 16 is a flowchart illustrating aspects of a transaction processing.
FIG. 17 is a flowchart illustrating aspects of a transaction processing.
FIG. 18 illustrates an example of a list screen.
FIG. 19 illustrates an example of a checkout screen.

### DETAILED DESCRIPTION

A problem to be solved by an exemplary embodiment is to provide a transaction processing system that can complete settlement without requiring the direct input of customer settlement data at a terminal apparatus which might be used by numerous customers while still allowing each customers to register contents of a sales transaction using the terminal apparatus.

According to an embodiment, a transaction processing system includes a first wireless terminal in which payment information associated with a customer is stored and a shopping cart with a code reader and a second wireless terminal. The second wireless terminal is configured to: transmit a commodity code read by the code reader to a server system to generate, on the server system, a shopping list including the commodity code; receive, from the server system, payment amount data indicating a total payment amount due for purchase of commodities on the shopping list; and transmit a settlement instruction along with the payment amount data to the first wireless terminal for performing a settlement operation with a settlement server using the payment information stored in the first wireless terminal.

Preferably, the second wireless terminal includes a display and is configured to display on the display a screen to select a settlement method from options including a first settlement using the first wireless terminal and a second settlement without using the first wireless terminal, and transmit the settlement instruction when the first settlement is selected.

Preferably, the shopping list is associated with a transaction ID, and the second wireless terminal is further configured to display, on the display, a code symbol representing the transaction ID when the second settlement is selected.

Preferably, the transaction processing system further comprises a checkout kiosk configured to read the code symbol displayed on the display and perform a settlement operation with the settlement server using the transaction ID obtained from the read code symbol.

Preferably, the first wireless terminal is configured to transmit to the second wireless terminal a notification indicating whether the settlement operation is complete.

Preferably, the shopping list is associated with a transaction ID, and the second wireless terminal includes a display and is further configured to display, on the display, a code symbol representing the transaction ID when the notification indicates that the settlement operation is not complete.

Preferably, the second wireless terminal is further configured to cause the server system to close the shopping list when the notification indicates that the settlement operation is complete.

Preferably, the first wireless terminal includes a display and configured to display, on the display, a code symbol representing a check-in code to establish a wireless connection with the second wireless terminal, and the second wireless terminal is configured to obtain the check-in code from the displayed code symbol read by the code reader and establish the wireless connection to the first wireless terminal using the check-in code.

Preferably, the second wireless terminal includes a display and is configured to display, on the display, a code symbol representing a check-in code to establish a wireless connection with the first wireless terminal, and the first wireless terminal includes a camera and is configured to establish the wireless connection with the second wireless terminal using the check-in code obtained from an image of the displayed code symbol captured by the camera.

Preferably, the second wireless terminal includes a first wireless communication interface configured to perform wireless communication with the server system according to a first wireless communication protocol and a second wireless communication interface configured to perform wireless communication with the first wireless terminal according to a second wireless communication protocol that supports a shorter communication range than the first wireless communication protocol.

There is also provided a transaction processing method using a system including a first wireless terminal in which payment information associated with a customer is stored and a shopping cart with a code reader and a second wireless terminal, the method comprising: transmitting, with the second wireless terminal, a commodity code read by the code reader to a server system to generate a shopping list including the commodity code; receiving payment amount data from the server system via the second wireless terminal, the payment amount data indicating a total payment amount due for purchase of commodities on the shopping list; and transmitting, from the second wireless terminal, a settlement instruction along with the payment amount data to the first wireless terminal for performing a settlement operation using the payment information stored in the first wireless terminal.

Preferably, the second wireless terminal includes a display, and the method further comprises displaying on the display a screen to select a settlement method from options including a first settlement using the first wireless terminal and a second settlement without using the first wireless terminal, wherein the settlement instruction is transmitted when the first settlement is selected.

Preferably, the shopping list is associated with a transaction ID, and the method further comprises displaying on the display a code symbol representing the transaction ID when the second settlement is selected.

Preferably, the system further includes a checkout kiosk provided in a store; and the method further comprises by the checkout kiosk: reading the code symbol displayed on the display and performing a settlement operation with the settlement server using the transaction ID obtained from the read code symbol.

Preferably, the transaction processing method further comprises transmitting from the first wireless terminal to the second wireless terminal a notification indicating whether or not the settlement operation is complete.

Hereinafter, an example embodiment of a transaction processing system will be described using the drawings.

The transaction processing system according to the embodiment is used for a shop where commodities are displayed for sale to a customer who visits the shop. That is, in the transaction processing system, commodity sales for a customer in a shop is a transaction to be processed.

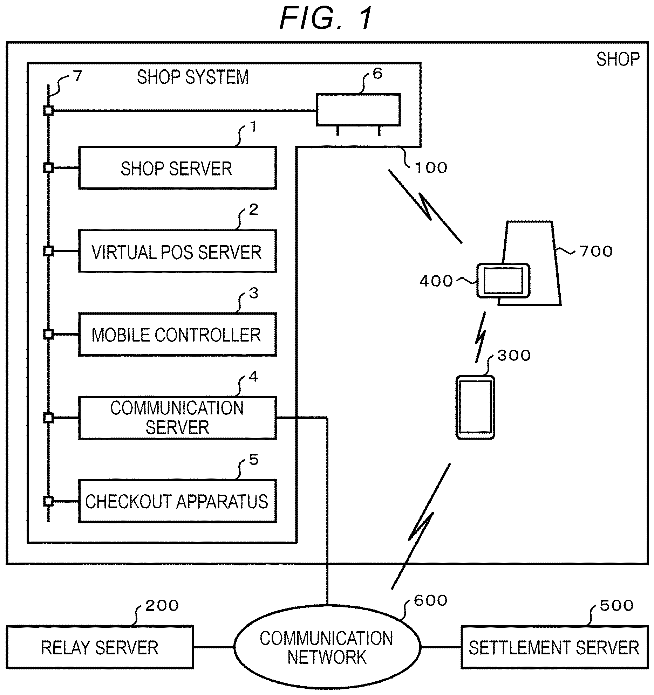

FIG. 1 is a block diagram illustrating a schematic configuration of a transaction processing system according to the embodiment.

The transaction processing system includes a shop system 100, a relay server 200, a user terminal 300, a cart terminal 400, a settlement server 500, and a communication network 600. A plurality of shop systems 100, the relay server 200, the user terminal 300, and the settlement server 500 can communicate with each other via the communication network 600.

The shop system 100 is provided for a shop and executes information processing for processing commodity sales in the shop.

The relay server 200 relays data communication between the user terminal 300 and the shop system 100. For example, the relay server 200 provides a relay function of data communication as a cloud service via the communication network 600.

The user terminal 300 is a terminal apparatus that is brought into a shop by a customer who does the shopping using the transaction processing system in the shop. The user terminal 300 has a function of executing wireless communication with the cart terminal 400 and a function of executing wireless communication with the communication network 600. As the user terminal 300, a communication terminal having a data communication function, for example, a smartphone or a tablet terminal can be used. The user terminal 300 is an example of the mobile terminal.

The cart terminal 400 is a terminal apparatus that functions as a user interface for a customer who does the shopping using the transaction processing system in a shop. The cart terminal 400 has a function of executing wireless communication with the shop system 100 and a function of executing communication with the user terminal 300. The cart terminal 400 is attached to a shopping cart 700 and provided in the shop. The cart terminal 400 is used by the customer in the shop. The cart terminal 400 is an example of the registration terminal.

The settlement server 500 executes a settlement process for online settlement in response to a settlement request via the communication network 600. The settlement server 500 may support only one of a plurality of settlement methods such as credit card settlement or electronic money settlement or may support a plurality of settlement methods. As the settlement server 500, for example, an existing settlement server that is operated by a settlement agency that supports a plurality of settlement services including a plurality of settlement methods can be adopted.

As the communication network 600, for example, the Internet, a virtual private network (VPN), a local area network (LAN), a public communication network, a mobile communication network, and the like can be used singly or can be used appropriately in combination. As the communication network 600, typically, a mobile communication network, the Internet, or a VPN is used.

The shop system 100 is configured such that a shop server 1, a virtual POS server 2, a mobile controller 3, a communication server 4, a checkout apparatus 5, and an access point 6 can communicate with each other via an in-shop communication network 7.

The shop server 1 is an information processing apparatus that executes overall management for a plurality of transactions to be processed by the transaction processing system. For example, the shop server 1 has the same function as that of an existing POS server.

The virtual POS server 2 is an information processing apparatus that executes information processing (hereinafter, referred to as "transaction process") for registration of a purchase commodity per transaction, settlement of a price for the purchase commodity, and the like in response to a request from an external apparatus. The virtual POS server 2 virtually implements some of functions in an existing POS terminal.

The mobile controller 3 is an information processing apparatus that executes information processing (hereinafter, referred to as "relay process") for relaying the virtual POS server 2 and the cart terminal 400 in order to allow the virtual POS server 2 to execute the transaction process while using the cart terminal 400 as a user interface device.

The communication server 4 executes a communication process for allowing the shop server 1, the virtual POS server 2, the mobile controller 3, and the checkout apparatus 5 to exchange data with the relay server 200 and the like via the communication network 600.

The checkout apparatus 5 executes a process for acquiring a price for the purchase commodity per transaction managed by the virtual POS server 2 and allowing the customer to pay the price. As the settlement method that can be used by the checkout apparatus 5 for the settlement, a part or all of well-known settlement methods such as cash settlement, credit card settlement, electronic money settlement, point settlement, or code settlement (also referred to as "mobile settlement", "smartphone settlement", or the like) may be used. The checkout apparatus 5 may be operated by a clerk or the customer. As the checkout apparatus 5, for example, a self-service checkout apparatus used in an existing semi-self-service-type POS system can be used. The checkout apparatus 5 may have a function of executing information processing for registering a commodity as a purchase commodity. In this case, for example, a face-to-face POS terminal used in an existing POS system or a self-service POS terminal used in an existing self-service-type POS system can be used as the checkout apparatus 5. The checkout apparatus 5 may be referred to as a checkout kiosk.

The access point 6 executes a communication process for allowing the cart terminal 400 to access the in-shop communication network 7 via wireless communication. As the access point 6, for example, a well-known communication device that executes wireless communication based on IEEE 802.11 can be used. The access point 6 is provided in the shop such that the cart terminal 400 can execute wireless communication at any applicable place in the shop. Depending on the size of the shop, a plurality of access points 6 may also be provided in the shop system 100.

As the in-shop communication network 7, the Internet, a VPN, a LAN, a public communication network, a mobile communication network, and the like can be used singly or can be used appropriately in combination. However, typically, the in-shop communication network 7 is a LAN.

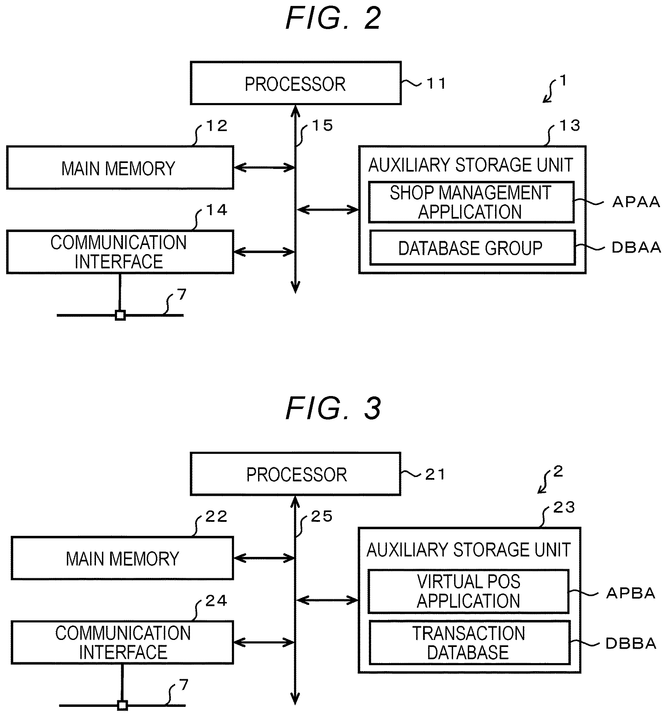

FIG. 2 is a block diagram illustrating a circuit configuration of the shop server 1.

The shop server 1 includes a processor 11, a main memory 12, an auxiliary storage unit 13, a communication interface 14, and a transmission line 15. The processor 11, the main memory 12, the auxiliary storage unit 13, and the communication interface 14 can communicate with each other through the transmission line 15. By connecting the processor 11, the main memory 12, and the auxiliary storage unit 13 through the transmission line 15, a computer for controlling the shop server 1 is configured.

The processor 11 corresponds to a central part of the computer. The processor 11 executes information processing for implementing various functions as the shop server 1 in accordance with an information processing program such as an operating system or an application program. The processor 11 is, for example, a central processing unit (CPU).

The main memory 12 corresponds to a main memory part of the computer. The main memory 12 includes a nonvolatile memory area and a volatile memory area. The main memory 12 stores the above-described information processing program in the nonvolatile memory area. The main memory 12 may store data required for the processor 11 to execute the information processing in the non-volatile or volatile memory area. The main memory 12 may use the volatile memory area as a work area where data is appropriately rewritten by the processor 11. The nonvolatile memory area is, for example, a read only memory (ROM). The volatile memory area is, for example, a random access memory (RAM).

The auxiliary storage unit 13 corresponds to an auxiliary storage part of the above-described computer. As the auxiliary storage unit 13, for example, well-known storage devices such as an electric erasable programmable read-only memory (EEPROM), a hard disk drive (HDD), or a solid state drive (SSD) can be used. The auxiliary storage unit 13 stores data used for the processor 11 to execute various processes and data generated during a process of the processor 11. The auxiliary storage unit 13 may also store the above-described information processing program.

The communication interface 14 executes data communication between the respective units connected to the in-shop communication network 7 in accordance with a predetermined communication protocol. As the communication interface 14, for example, a well-known communication device for LAN can be adopted.

The transmission line 15 includes an address bus, a data bus, and a control signal line, and transmits data and a control signal to be transmitted between the respective parts connected to each other.

The auxiliary storage unit 13 stores a shop management application APAA that is one information processing program. The shop management application APAA is an application program, in which information processing for implementing a function as the shop server 1 is described.

A part of a storage area in the auxiliary storage unit 13 is used as a database group DBAA. The database group DBAA includes a plurality of databases for managing various information. One database in the database group DBAA is a commodity database for managing commodities that are for sale in the shop. The commodity database is a set of data records correlating to commodities to be managed. The data record in the commodity database includes data regarding a commodity correlating to the transaction, for example, a commodity code, a price, and a commodity name. The commodity code is an identification code determined to identify the commodity per stock keeping unit (SKU). For example, a Japanese article number (JAN) code is used. The commodity name is a name determined to allow a person to easily distinguish the commodity. The price is a price for selling the commodity.

One database in the database group DBAA is a user database for managing users of the shop. The user database is a set of data records correlating to customers registered as the users of the shop. The data record in the user database includes data regarding a customer correlating to the transaction, for example, a user code and attribute information for specifying the user. The user code is a unique identification code determined per user of the shop to individually identify the user of the shop. The attribute information may include a name, a gender, an age, an address, and a phone number. In addition, the data record in the user database may also include settlement data reported by the user of the shop. The settlement data is, for example, a credit card number or a code settlement ID (identifier). In addition, in order to select a plurality of settlement methods, the settlement data may also include a settlement method code for identifying the settlement method. In addition, in the case of a shop that provides a point service, the data record in the user database may include an identifier for identifying a user of the point service and an accumulated point score. In addition, the data record in the user database may also include a user identifier for identifying a user of an electronic receipt service. Various data in the data record of the user database do not need to include substantial data for all the users. For example, the user database may include only a point ID or an electronic receipt ID that is registered by a user in advance.

In addition, the database group DBAA may include various databases that are managed in POS servers in an existing POS system. Databases in the database group DBAA, data in the databases, or structures of the data may be determined by the shop.

FIG. 3 is a block diagram illustrating a circuit configuration of the virtual POS server 2.

The virtual POS server 2 includes a processor 21, a main memory 22, an auxiliary storage unit 23, a communication interface 24, and a transmission line 25. The processor 21, the main memory 22, the auxiliary storage unit 23, and the communication interface 24 can communicate with each other through the transmission line 25. By connecting the processor 21, the main memory 22, and the auxiliary storage unit 23 through the transmission line 25, a computer for controlling the virtual POS server 2 is configured. The summary of the functions of the processor 21, the main memory 22, the auxiliary storage unit 23, the communication interface 24, and the transmission line 25 is the same as that of the processor 11, the main memory 12, the auxiliary storage unit 13, the communication interface 14, and the transmission line 15, and thus the description thereof will not be repeated.

The auxiliary storage unit 23 stores a virtual POS application APBA instead of the shop management application APAA. The virtual POS application APBA is an application program, in which the transaction process is described.

In addition, a part of the storage area of the auxiliary storage unit 23 is used as a transaction database DBBA instead of the database group DBAA. The transaction database DBBA is a set of data records correlating to a transaction with a customer who is doing the shopping in the shop. The data record in the transaction database DBBA includes a transaction code and commodity data regarding a commodity registered as a purchase commodity. The transaction code is a unique identification code set per transaction in order to individually identify a transaction. The commodity data represents a commodity code, a commodity name, a price, and a quantity.

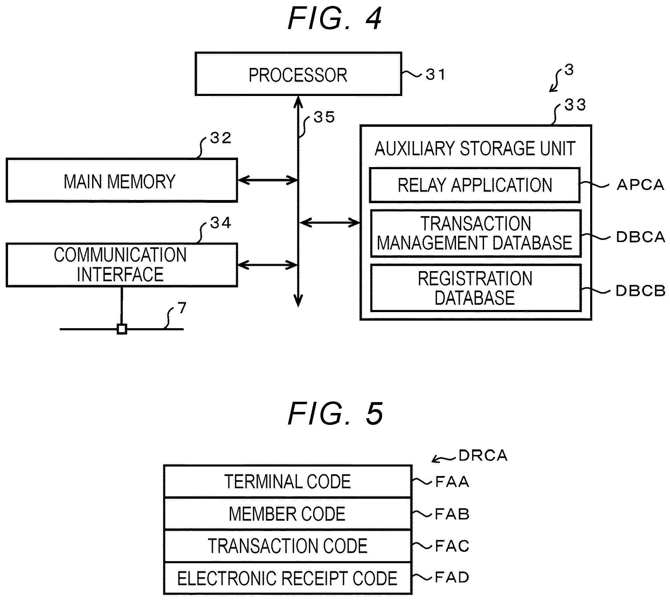

FIG. 4 is a block diagram illustrating a circuit configuration of the mobile controller 3.

The mobile controller 3 includes a processor 31, a main memory 32, an auxiliary storage unit 33, a communication interface 34, and a transmission line 35. The processor 31, the main memory 32, the auxiliary storage unit 33, and the communication interface 34 can communicate with each other through the transmission line 35. By connecting the processor 31, the main memory 32, and the auxiliary storage unit 33 through the transmission line 35, a computer for controlling the mobile controller 3 is configured. The summary of the functions of the processor 31, the main memory 32, the auxiliary storage unit 33, the communication interface 34, and the transmission line 35 is the same as that of the processor 11, the main memory 12, the auxiliary storage unit 13, the communication interface 14, and the transmission line 15, and thus the description thereof will not be repeated.

The auxiliary storage unit 33 may store a relay application APCA instead of the shop management application APAA. The relay application APCA is an application program, in which the relay process is described.

In addition, a part of the storage area of the auxiliary storage unit 23 is used as a transaction management database DBCA and a registration database DBCB instead of the database group DBAA.

FIG. 5 is a schematic diagram illustrating a data structure of a data record DRCA in the transaction management database DBCA.

The transaction management database DBCA is a set of data records DRCA correlating to the cart terminal 400 used by customers in the shop. Therefore, when the single cart terminal 400 is being used, the transaction management database DBCA includes one data record DRCA. In addition, when the single cart terminal 400 is not being used, the transaction management database DBCA does not include the data record DRCA. The data record DRCA includes fields FAA, FAB, FAC, and FAD.

In the field FAA, a terminal code for identifying the cart terminal 400 correlating to the transaction is set. As the terminal code, for example, a unique identification code set per communication terminal in order to identify individual communication terminals used as the cart terminals 400 can be used. Alternatively, as the terminal code, for example, an identification code set for a cart terminal application described below when the cart terminal application is installed in the cart terminal 400 can be used. In the field FAB, a member code for distinguishing a customer that is using the cart terminal 400 correlating to the transaction from other customers is set. In the field FAC, a transaction code of a transaction that is executed using the cart terminal 400 correlating to the transaction is set. In the field FAD, an electronic receipt ID is optionally set. The data record DRCA may include another field in which another data different from that in the fields FAA to FAD is set and may not include some of the fields such as the field FAD.

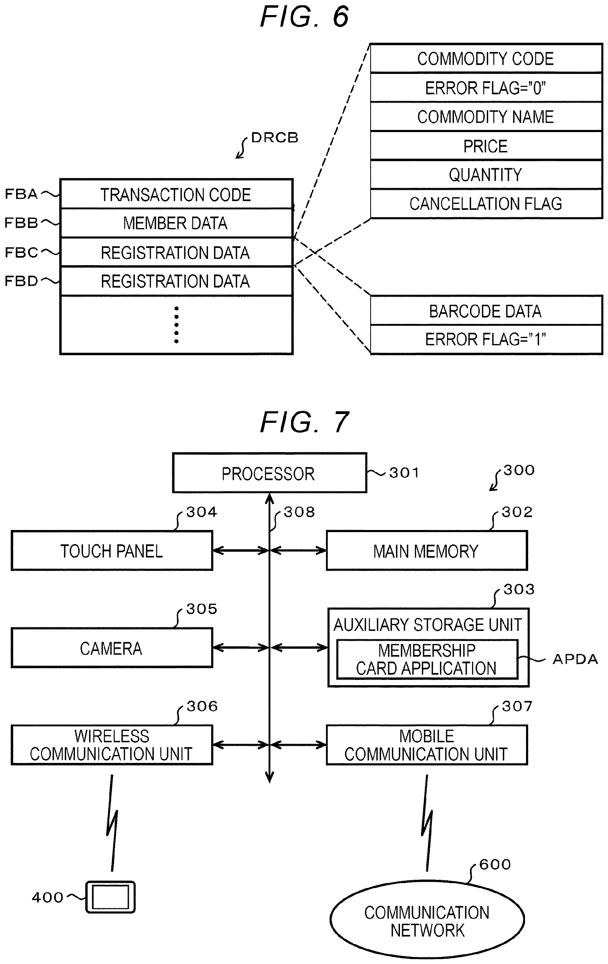

FIG. 6 is a schematic diagram illustrating a data structure of a data record DRCB in the registration database DBCB.

The registration database DBCB is a set of data records DRCB correlating to a transaction with a customer who is doing the shopping in the shop. The data record DRCB includes fields FBA and FBB. The data record DRCA may also include fields FBC, FBD, ..., and the like.

In the field FBA, a transaction code of the transaction correlating to the data record is set. This transaction code is the same as that set in the field FAB in the data record DRCA correlating to the cart terminal 400 that is used for the transaction correlating to the data record. In the field FBB, member data is set. In the field FBC, FBD, and subsequent fields the registration data regarding registration of a commodity is set. These instances of registration data will be described further below.

When registration of two or more purchase commodities is attempted in the transaction correlating to the data record, the data record DRCB includes a field after the field FBC for each commodity to be purchased. In the field after the field FBC, the same kind of registration data as that in the field FBC is set.

As hardware of the shop server 1, the virtual POS server 2, or the mobile controller 3, for example, a general-purpose server apparatus can be used. In general, the shop server 1, the virtual POS server 2, or the mobile controller 3 is transferred in a state where the shop management application APAA, the virtual POS application APBA, or the relay application APCA is stored in the auxiliary storage unit 13, 23, or 33 and the database group DBAA, the transaction database DBBA, or the transaction management database DBCA and the registration database DBCB are not stored in the auxiliary storage unit 13,23, or 33. However, hardware in a state where the shop management application APAA, the virtual POS application APBA, or the relay application APCA is not stored in the auxiliary storage unit 13, 23, or 33 or in a state where application programs having the same type and different versions are stored in the auxiliary storage unit 13, 23, or 33 and the shop management application APAA, the virtual POS application APBA, or the relay application APCA may be individually transferred. By writing the shop management application APAA, the virtual POS application APBA, or the relay application APCA to the auxiliary storage unit 13, 23, or 33 in accordance with an operation of an operator, the shop server 1, the virtual POS server 2, or the mobile controller 3 may be configured. The shop management application APAA, the virtual POS application APBA, or the relay application APCA can be transferred through communication via a network or a removable recording medium such as a magnetic disk, a magneto-optic disk, an optical disk, or a semiconductor memory in which the shop management application APAA, the virtual POS application APBA, or the relay application APCA is recorded. The transaction database DBBA or the transaction management database DBCA and the registration database DBCB are configured in the auxiliary storage unit 13, 23, or 33 by the processor 11, 21, or 31 executing information processing based on the shop management application APAA, the virtual POS application APBA, or the relay application APCA. At least a part of the shop management application APAA and the databases in the database group DBAA may be stored in the main memory 12. At least a part of the virtual POS application APBA and the transaction database DBBA may be stored in the main memory 22. At least a part of the relay application APCA, the transaction management database DBCA, and the registration database DBCB may be stored in the main memory 32.

FIG. 7 is a block diagram illustrating a circuit configuration of the user terminal 300.

The user terminal 300 includes a processor 301, a main memory 302, an auxiliary storage unit 303, a touch panel 304, a camera 305, a wireless communication unit 306, a mobile communication unit 307, and a transmission line 308. The processor 301, the main memory 302, the auxiliary storage unit 303, the touch panel 304, the camera 305, and the mobile communication unit 307 can communicate with each other through the transmission line 308. By connecting the processor 301, the main memory 302, and the auxiliary storage unit 303 through the transmission line 308, a computer for controlling the user terminal 300 is configured. The summary of the functions of the processor 301, the main memory 302, the auxiliary storage unit 303, and the transmission line 308 is the same as that of the processor 11, the main memory 12, the auxiliary storage unit 13, and the transmission line 15, and thus the description thereof will not be repeated.

The touch panel 304 functions as an input device and a display device of the user terminal 300.

The camera 305 includes an optical system and an image sensor and generates image data with the image sensor, the image data representing an image in a field of view that is formed by the optical system.

The wireless communication unit 306 transmits and receives data to and from the cart terminal 400 through wireless communication in accordance with a wireless communication protocol. As the wireless communication unit 306, for example, a well-known communication device based on Bluetooth® can be used. The wireless communication unit 306 is an example of the first communication unit.

The mobile communication unit 307 is an interface of data communication via the communication network 600. As the mobile communication unit 307, for example, a well-known communication device for data communication via a mobile communication network can be used.

The auxiliary storage unit 303 stores a membership certificate application APDA that is one information processing program. The membership certificate application APDA is an application program, in which information processing (hereinafter, referred to as "membership certificate process") described below for allowing the user terminal 300 to function as a membership certificate for certifying the use qualification of the cart terminal 400 is described. The membership certificate process also includes information processing for setting a price of a purchase commodity in cooperation with the cart terminal 400.

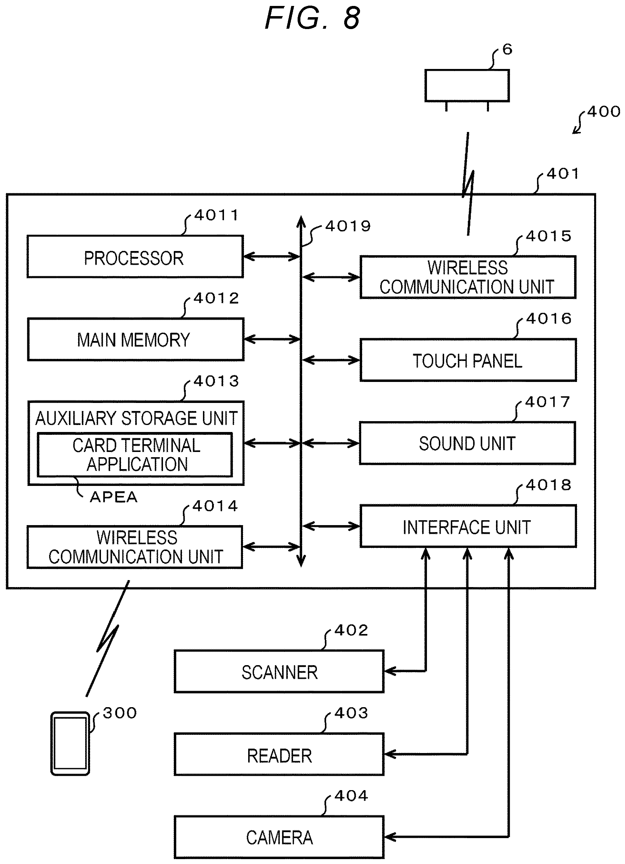

FIG. 8 is a block diagram illustrating a circuit configuration of the cart terminal 400.

The cart terminal 400 includes a tablet computer 401, a scanner 402, a reader 403, and a camera 404.

The tablet computer 401 includes a processor 4011, a main memory 4012, an auxiliary storage unit 4013, wireless communication units 4014 and 4015, a touch panel 4016, a sound unit 4017, a interface unit 4018, and a transmission line 4019. The processor 4011, the main memory 4012, the auxiliary storage unit 4013, the wireless communication units 4014 and 4015, the touch panel 4016, the sound unit 4017, and the interface unit 4018 can communicate with each other through the transmission line 4019. By connecting the processor 4011, the main memory 4012, and the auxiliary storage unit 4013 through the transmission line 4019, a computer for controlling the cart terminal 400 is configured. The summary of the functions of the processor 4011, the main memory 4012, the auxiliary storage unit 4013, the touch panel 4016, the wireless communication unit 4015, and the transmission line 4019 is the same as that of the processor 11, the main memory 12, the auxiliary storage unit 13, the touch panel 304, the wireless communication unit 306, and the transmission line 15, and thus the description thereof will not be repeated.

The auxiliary storage unit 4013 stores a cart terminal application APEA instead of the shop management application APAA. The cart terminal application APEA is an application program, in which information processing (hereinafter, referred to as "UI process") for allowing the cart terminal 400 to function as a user interface of the shop system 100 is described. In general, the cart terminal is transferred in a state where the cart terminal application APEA is stored in the auxiliary storage unit 4013. However, hardware in a state where the cart terminal application APEA is not stored in the auxiliary storage unit 4013 or in a state where application programs having the same type but different versions are stored in the auxiliary storage unit 4013 and the cart terminal application APEA may be individually transferred. By writing the cart terminal application APEA to the auxiliary storage unit 4013 in accordance with an operation of an operator, the cart terminal 400 may be configured. The cart terminal application APEA can be transferred through communication via a network or a removable recording medium such as a magnetic disk, a magneto-optic disk, an optical disk, or a semiconductor memory in which the cart terminal application APEA is recorded. The cart terminal application APEA may be stored in the main memory 4012.

The wireless communication unit 4014 transmits and receives data to and from the user terminal 300 through wireless communication in accordance with a wireless communication protocol. As the wireless communication unit 4014, for example, a well-known communication device based on Bluetooth® can be used. The wireless communication unit 4014 is an example of the second communication unit.

The sound unit 4017 outputs various sounds such as a voice or a melody.

The scanner 402, the reader 403, and the camera 404 are connected to the interface unit 4018. The interface unit 4018 is an interface through which the scanner 402, the reader 403, and the camera 404 transmit and receive data to and from the processor 4011. As the interface unit 4018, for example, an existing universal serial bus (USB) controller can be used.

The scanner 402 reads a code symbol such as a barcode or a two-dimensional data code. The scanner 402 is used for reading a code symbol that is shown on a commodity and represents a commodity code or the like of the commodity. The scanner 402 is used for reading a code symbol that is shown on a membership card or displayed on a mobile terminal and represents a member code or the like. The scanner 402 outputs data represented by the read code symbol. The scanner 402 may be a type that reads the code symbol by scanning of laser beams or may be a type that reads the code symbol from an image acquired by an imaging device. The scanner 402 may be referred to as a code reader.

The reader 403 reads and outputs data recorded in a recording medium. When the recording medium is a magnetic card, the reader 403 is a magnetic card reader. When the recording medium is a contact IC card, the reader 403 is an IC card reader. When a recording medium using radio frequency identification (RFID), for example, a non-contact IC card or a smartphone is used, a RFID reader is used as the reader 403.

The camera 404 captures images the inside of a shopping basket placed in the shopping cart 700 in a bird's-eye view. The camera 404 outputs image data representing the acquired image.

Next, an operation of the transaction processing system configured as described above will be described. The content of various processes described below is merely exemplary and, for example, change in the order of a part of the processing, omission of a part of the processing, or addition of another processing can be appropriately made. For example, in the following description, for easy understanding of the characteristic operation of the embodiment, a part of the process will not be described. For example, when an error occurs, a process for dealing with the error may be executed, but a part of the process will not be described.

A service that is provided to a customer who uses the cart terminal 400 in response to the operation of the transaction processing system will be referred to as "cart POS service". In addition, a service that can execute settlement using the user terminal 300 while using the cart POS service will be referred to as "smartphone settlement service".

In order to allow the customer to use the smartphone settlement service, the membership certificate application APDA is installed in a smartphone belonging to the customer such that the customer can use the smartphone as the user terminal 300. In addition, the customer designates settlement data to be applied to the settlement using the smartphone settlement service and requests the processor 4011 to register the settlement data. In response to this request, the processor 4011 causes the main memory 4012 or the auxiliary storage unit 4013 to store the designated settlement data. Alternatively, the customer follows the use procedure of electronic money to cause an integrated circuit (IC) chip for electronic money attached to the user terminal 300 to store settlement data for electronic money.

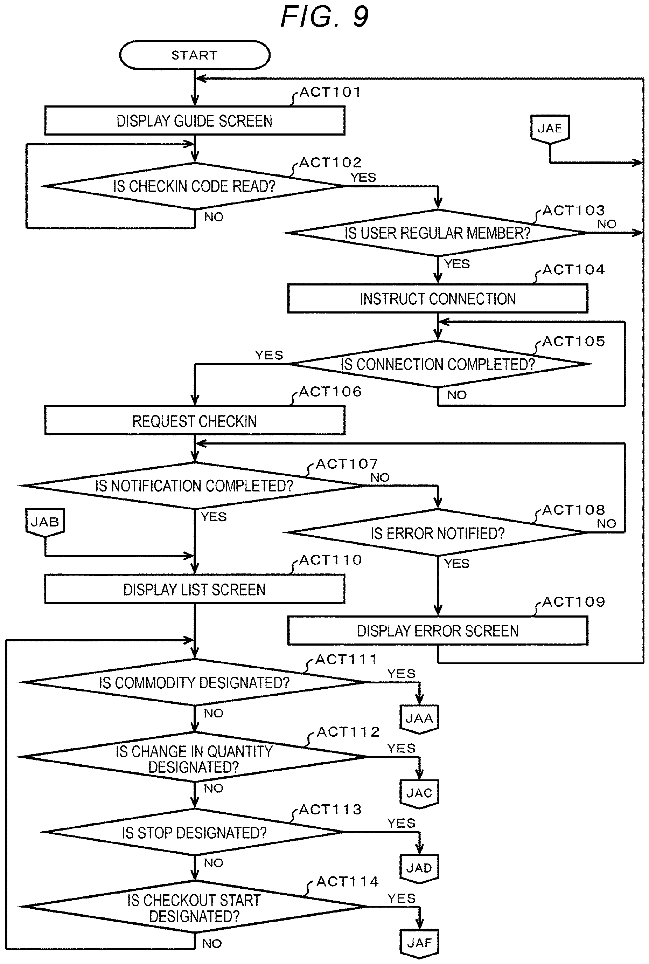

FIGS. 9, 10, and 11 are flowcharts illustrating the UI process performed by the processor 4011.

When the cart terminal 400 starts, the processor 4011 starts the UI process.

In ACT 101 illustrated in FIG. 9, the processor 4011 displays a guide screen on the touch panel 4016. The guide screen is a screen for guiding a customer for an operation for starting the use of the cart terminal 400. The guide screen is a screen for causing the customer to scan a check-in code displayed on the user terminal 300 using the scanner 402.

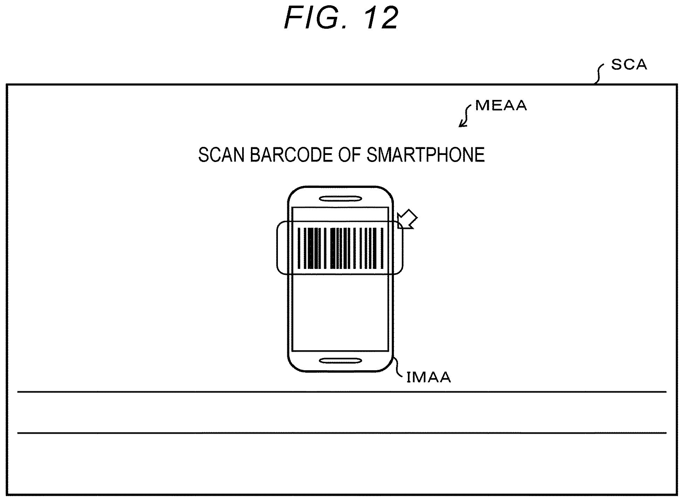

FIG. 12 is a diagram illustrating an example of a guide screen SCA.

The guide screen SCA shows a message MEAA and an image IMAA. The message MEAA is a character message that causes the customer to read the check-in code displayed by the user terminal 300. The image IMAA is an image that is paired with the message MEAA to guide the customer for a barcode to be scanned in order to read the check-in code.

The customer executes user registration to use the cart POS service. Through this user registration, a user ID is assigned to the customer. The customer brings the user terminal 300 in a state where the membership certificate process based on the membership certificate application APDA is started, and enters any applicable shop where the shop system 100 is provided. During the start of the membership certificate process, the processor 301 executes a user authentication process to determine whether or not the customer is a regular user of which user registration is completed. Hereinafter, the simple expression "user terminal 300" refers to the above-described user terminal 300.

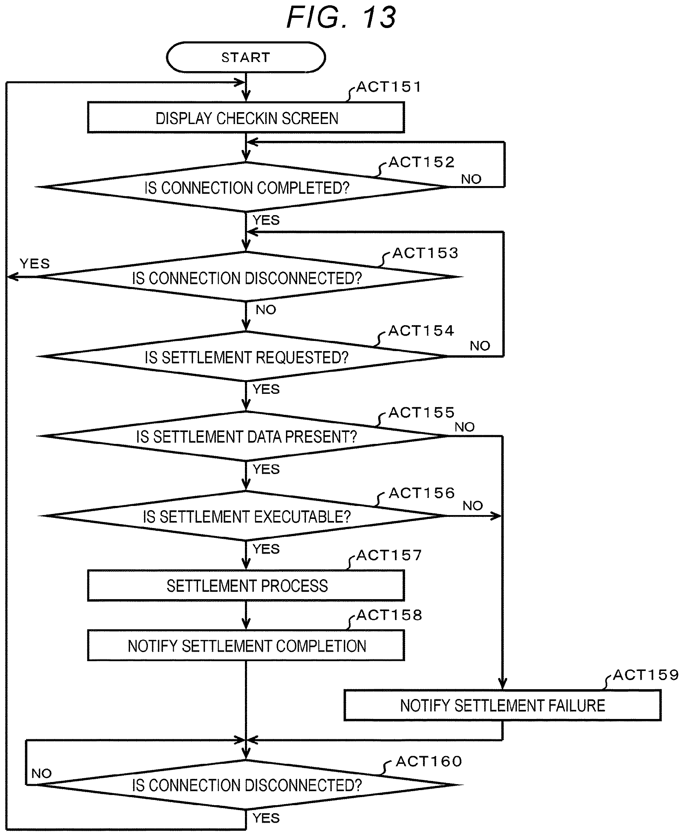

FIG. 13 is a flowchart illustrating the membership certificate process performed by the processor 301.

In ACT 151, the processor 301 displays a check-in screen on the touch panel 304. The check-in screen is a screen for causing the cart terminal 400 to acquire the check-in code. The check-in screen includes a barcode representing the check-in code. The check-in screen may include a two-dimensional code or a character string representing the check-in code. The check-in code includes predetermined connection data for establishing wireless connection with the wireless communication unit 306, and predetermined authentication data for indicating whether or not the user of the user terminal 300 is a member of the cart POS service using the cart terminal 400.

The customer takes out the shopping cart 700 in the non-used state from a storage area or the like, and scans a barcode on the check-in screen using the scanner 402 in the cart terminal 400 attached to the shopping cart 700. Accordingly, the scanner 402 reads the check-in code representing the barcode. Hereinafter, the simple expression "cart terminal 400" refers to the above-described cart terminal 400.

The process proceeds to ACT 102 after the processor 4011 operates to display the guide screen in ACT 101 in FIG. 9.

In ACT 102, the processor 4011 waits for the check-in code to be read. When the check-in code is read by the scanner 402 as described above, the processor 4011 determines YES and the process proceeds to ACT 103.

In ACT 103, the processor 4011 determines whether or not the user of the user terminal 300 is a regular member. For example, the processor 4011 determines whether or not the authentication data in the check-in code matches predetermined data. Alternatively, the processor 4011 may execute member authentication with reference to the user database in the database group DBAA in the shop server 1. In addition, various techniques for user authentication can be appropriately adopted. When the processor 4011 cannot check that the user of the user terminal 300 is a regular member, the processor 4011 determines NO and the process returns to ACT 101. At this time, the processor 4011 may execute an error process, for example, may display an error screen for notifying the customer that an appropriate barcode is not scanned on the touch panel 4016.

When the processor 4011 can check that the user of the user terminal 300 is a regular member, the processor 4011 determines YES in ACT 103 and the process proceeds to ACT 104. At this time, the processor 4011 identifies the user terminal 300 as a terminal belonging to the customer that is a regular member. Thus, by the processor 4011 executing the information processing based on the cart terminal application APEA, a computer including the processor 4011 as a central part functions as the control unit.

In ACT 104, the processor 4011 instructs the wireless communication unit 4014 to establish wireless connection to the user terminal 300 based on the connection data in the check-in code. Accordingly, the wireless communication unit 4014 attempts the wireless connection according to a procedure determined based on the communication standard. As a result, the wireless connection between the wireless communication unit 4014 and the wireless communication unit 306 of the user terminal 300 is established.

In ACT 105, the processor 4011 waits for completion of the connection. When the wireless connection is established as described above, the processor 4011 determines YES and the process proceeds to ACT 106.

In ACT 106, the processor 4011 requests the mobile controller 3 to execute check-in. Specifically, the processor 4011, transmits request data for requesting check-in to the mobile controller 3 through wireless communication to the access point 6. The request data is transmitted to the mobile controller 3 through the access point 6 and the in-shop communication network 7. The processor 4011 causes the request data for requesting check-in to include identification data for identifying the check-in request and a terminal code. The processor 4011 may cause the request data to include a member code. For example, when the authentication data includes the member code, the processor 4011 extracts the member code from the authentication data. Alternatively, for example, the processor 4011 acquires the member code from the user database during the authentication in ACT 103.

Various requests from the cart terminal 400 to the mobile controller 3 described below are implemented by transmitting the request data including identification data for identifying the reason for the request from the cart terminal 400 to the mobile controller 3 through the access point 6 and the in-shop communication network 7 as described above.

When the request data for requesting check-in is received through the communication interface 34, the processor 31 in the mobile controller 3 starts the relay process regarding the transaction of the customer who attempts check-in based on the relay application APCA.

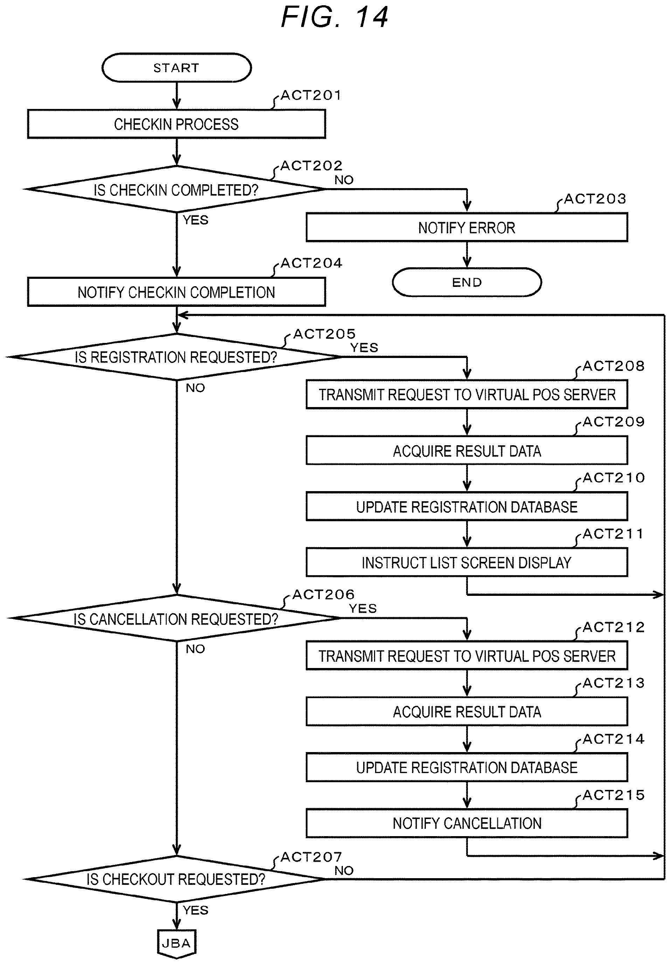

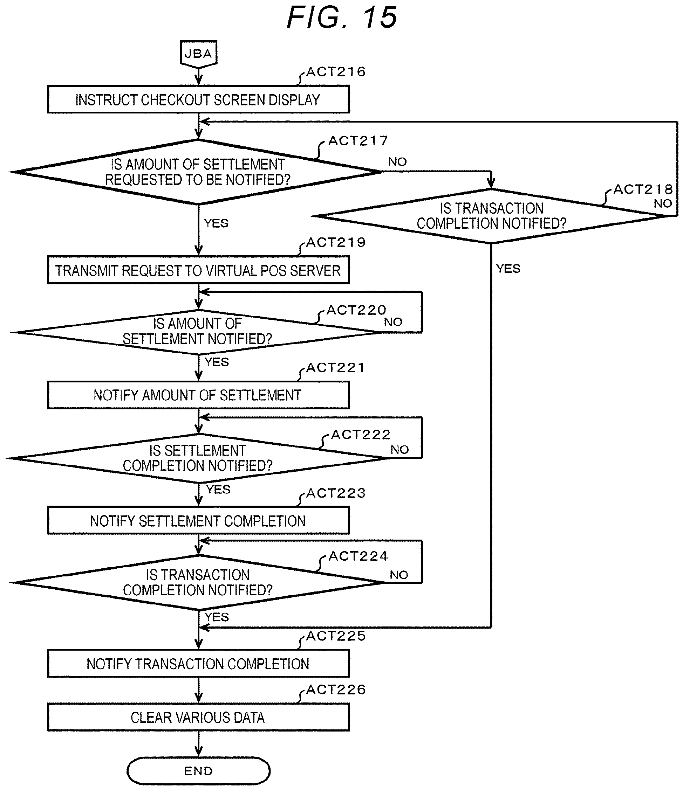

FIGS. 14 and 15 are flowcharts illustrating the relay process performed by the processor 31.

The processor 31 starts the relay process whenever the request data for requesting check-in is received through the communication interface 34. When the relay process started based on another request is executed previously, a new relay process starts along with the previous relay process. That is, the processor 31 may simultaneously execute a plurality of relay processes for a plurality of cart terminals 400. In the following description of the relay process, the simple expression "cart terminal 400" refers to the cart terminal 400 on which the relay process in the description is to be executed.

In ACT 201 in FIG. 14, the processor 31 executes a check-in process. For example, the processor 31 requests the virtual POS server 2 to start the transaction and receives a notification of the transaction code. The processor 31 adds a new data record DRCA to the transaction management database DBCA. The processor 31 sets the terminal code in the request data in the field FAA of the new data record DRCA. When the request data includes a member code, the processor 31 sets the member code in the field FAB of the new data record DRCA. The processor 31 sets the notified transaction code in the field FAC of the new data record DRCA.

When the start of the transaction is requested from the mobile controller 3, the processor 21 in the virtual POS server 2 starts the transaction process based on the virtual POS application APBA.

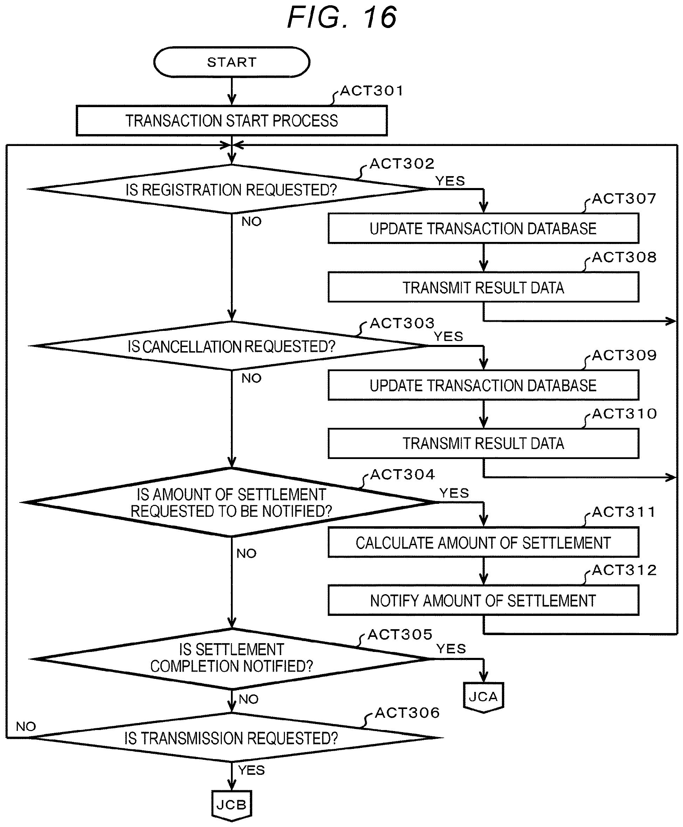

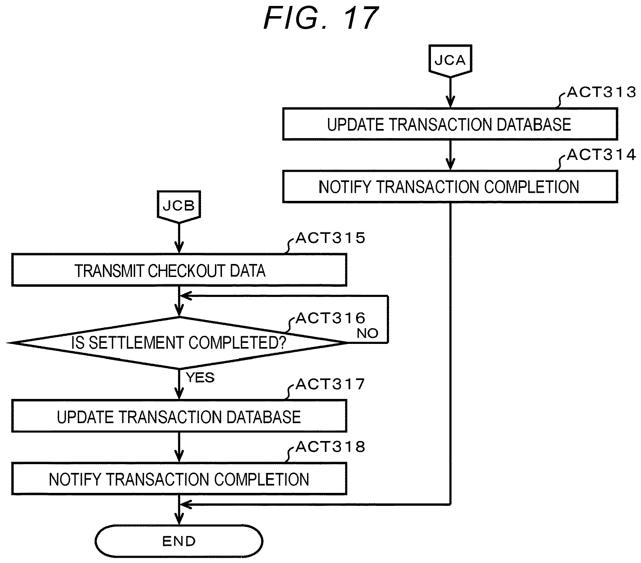

FIGS. 16 and 17 are flowcharts illustrating the transaction process performed by the processor 21.

Whenever the start of the transaction is requested, the processor 21 starts the transaction process. When another transaction process is executed previously, the processor 21 starts a new transaction process along with the previous transaction process. That is, when a plurality of relay processes are executed by the mobile controller 3, the processor 21 simultaneously executes a plurality of transaction processes respectively corresponding to the relay processes.

In ACT 301 in FIG. 16, the processor 21 executes a transaction start process. In the transaction start process, the processor 21 determines a transaction code based on a predetermined rule, and updates the transaction database DBBA to include a new data record for managing a purchase commodity of a transaction identified by the transaction code. The processor 21 notifies the mobile controller 3 of the determined transaction code.

In ACT 302, the processor 21 determines whether or not a change in purchase commodities is requested. When not, the processor 21 determines NO and the process proceeds to ACT 303.

In ACT 303, the processor 21 determines whether or not cancellation of the transaction is requested. When not, the processor 21 determines NO and the process proceeds to ACT 304.

In ACT 304, the processor 21 determines whether or not notification of the amount of settlement is requested. When not, the processor 21 determines NO and the process proceeds to ACT 305.

In ACT 305, the processor 21 determines whether or not completion of the settlement is notified. When not, the processor 21 determines NO and the process proceeds to ACT 306.

In ACT 306, the processor 21 determines whether or not transmission of settlement data is requested. When not, the processor 21 determines NO and the process proceeds to ACT 302.

Thus, in ACT 302 to ACT 306, the processor 21 waits for the request of any one of a change, a cancellation, a notification of the amount of settlement, or a transmission or the completion of the settlement.

When the check-in process in ACT 201 in FIG. 14 ends, the process proceeds to ACT 202.

In ACT 202, the processor 31 determines whether or not the check-in process is normally completed. When the check-in process cannot be normally completed due to an abnormality, the processor 31 determines NO and the process proceeds to ACT 203.

In ACT 203, the processor 31 notifies the cart terminal 400 of an error. For example, the processor 31 transmits notification data for the error notification to the cart terminal 400 through the in-shop communication network 7 and the access point 6. The processor 31 causes the notification data to include identification data for identifying the error notification. The processor 31 may cause the notification data to include an error code representing the reason for the error. Through the above-described processes, the processor 31 ends the relay process.

Various notifications from the mobile controller 3 to the cart terminal 400 described below are implemented by transmitting the notification data including identification data for identifying the reason for the notification from the mobile controller 3 to the cart terminal 400 through the in-shop communication network 7 and the access point 6 as described above.

When the check-in process is normally completed, the processor 31 determines YES in ACT 202 and the process proceeds to ACT 204.

In ACT 204, the processor 31 notifies check-in completion to the cart terminal 400.

The processor 4011 in the cart terminal 400 proceeds to processing in ACT 107 after requesting the check-in in ACT 106 in FIG. 9.

In ACT 107, the processor 4011 determines whether or not the check-in completion is notified. When not, the processor 4011 determines NO and the process proceeds to ACT 108.

In ACT 108, the processor 4011 determines whether or not an error of the check-in is notified. When not, the processor 4011 determines NO and the process returns to ACT 107.

Thus, in ACT 107 and ACT 108, the processor 4011 waits for the notification of the check-in completion or the error. When the notification data for the error notification is received by the wireless communication unit 306, the processor 4011 determines YES in ACT 108 and the process proceeds to ACT 109.

In ACT 109, the processor 4011 displays the error screen on the touch panel 304. The error screen is a screen determined to notify the customer of check-in failure. When the processor 4011 is instructed to cancel the display of the error screen in accordance with, for example, an operation of a GUI element displaying the error screen, the process returns to ACT 101.

On the other hand, when the notification data for notifying the check-in completion as described above is received by the wireless communication unit 306, the processor 4011 determines YES in ACT 107 and the process proceeds to ACT 110.

In ACT 110, the processor 4011 displays a list screen on the touch panel 304. The list screen is a screen that displays a list of registered purchase commodities.

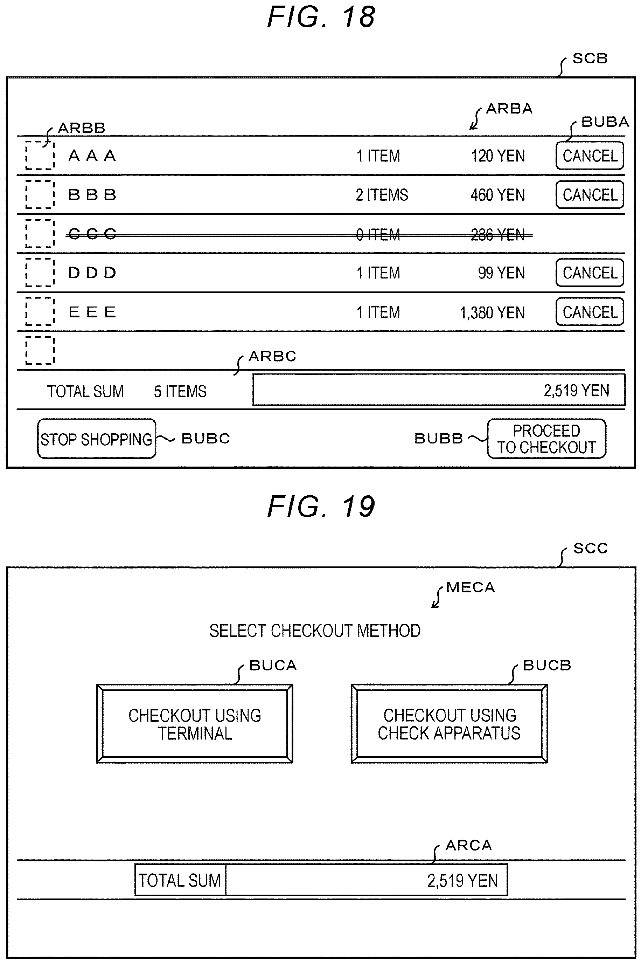

FIG. 18 illustrates an example of a list screen SCB.

The list screen SCB displays areas, ARBA, ARBB, and ARBC, and buttons BUBA, BUBB, and BUBC. The area ARBA displays the list of registered purchase commodities. More specifically, the area ARBA displays commodity names regarding the purchase commodities in a state where the commodity names are arranged in a row direction. The area ARBA displays a score for which the commodity is registered as a purchase commodity and a selling price of the commodity in a state where the score and the selling price are arranged in a column direction with respect to the commodity name. In the area ARBA, a commodity name, a score, and a selling price of a commodity that is temporarily registered as a purchase commodity but is canceled are struck out. That is, the list screen SCB displays a state where commodities having commodity names "AAA", "BBB", "DDD", and "EEE" are registered and a commodity having a commodity name "CCC is temporarily registered but is already canceled. However, when the processor 4011 executes ACT 110 first, the purchase commodities are not yet registered. Accordingly, the area ARBA of the list screen SCB displayed by the processor 4011 initially executing ACT 110 does not display commodity names, scores, and selling prices of the purchase commodities.

The area ARBB is arranged next to each of the rows of the areas ARBA. Although not specifically depicted in FIG. 18, in general, the area ARBB displays an icon corresponding to the commodity correlating to the area ARBB. The icon displayed in the area ARBB represents that the commodity is a target for various discounts such as a set discount, an age-restricted commodity, or the like.

The area ARBC displays a total score and a total sum for the registered purchase commodities.

The button BUBA is arranged in a row where the purchase commodity is displayed among respective rows of the areas ARBA. The button BUBA is a soft key for allowing an operator to instruct cancelation of the purchase commodity displayed next to the button BUBA. The button BUBB is a soft key for allowing an operator to instruct completion of the registration of the purchase commodities and transition to checkout. The button BUBC is a soft key for allowing an operator to instruct cancellation of all the registered purchase commodities and stop of shopping.

In ACT 111 in FIG. 9, the processor 4011 determines whether or not the commodity is designated. When not, the processor 4011 determines NO and the process proceeds to ACT 112.

In ACT 112, the processor 4011 determines whether or not a change in quantity is designated. When not, the processor 4011 determines NO and the process proceeds to ACT 113.

In ACT 113, the processor 4011 determines whether or not stop of shopping is designated. When not, the processor 4011 determines NO and the process proceeds to ACT 114.

In ACT 114, the processor 4011 determines whether or not checkout start is designated. When not, the processor 4011 determines NO and the process proceeds to ACT 111.

Thus, in ACT 111 to ACT 114, the processor 4011 waits for the designation of any one of a commodity, a quantity, a stop, or a checkout start.

The customer moves in the shop searching for a purchase commodity while pushing the shopping cart 700. When the purchase commodity is found, the customer takes out the commodity from a display area and places the commodity in the shopping cart 700. At this time, the customer executes an operation for designating this commodity as the purchase commodity. The operation is, for example, an operation of the scanner 402 for reading the code symbol displayed on the commodity. In addition, the above-described operation is, for example, an operation of the touch panel 4016 for designating the commodity. When a plurality of commodities having the same commodity code are registered as purchase commodities, the customer may execute an operation of designating the quantity to allow the scanner 402 to read the code symbol once.

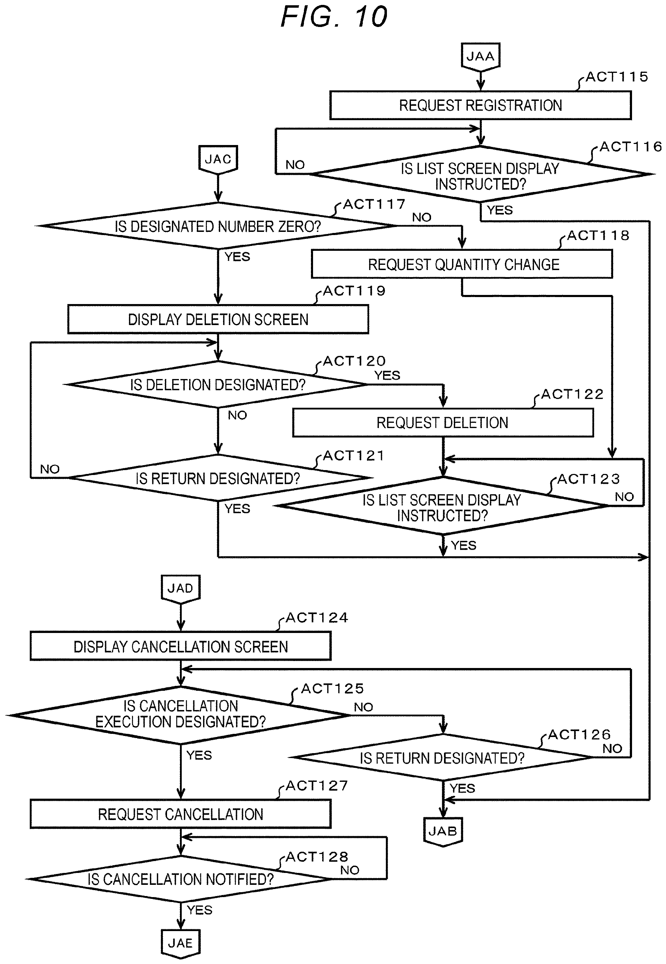

When the commodity is designated through these operations, the processor 4011 determines YES in ACT 111 and the process proceeds to ACT 115 in FIG. 10.

In ACT 115, the processor 4011 requests the mobile controller 3 to register the commodity. The processor 4011 causes the request data to be transmitted to include designation data regarding the content of the above-described designation by the customer. The processor 4011 causes the designation data to include at least a commodity code of the designated commodity. At this time, the processor 4011 acquires information regarding the purchase commodity in accordance with an operation on the touch panel 4016. Thus, by the processor 4011 executing the information processing based on the card terminal application AREA, a computer including the processor 4011 as a central part functions as the first acquisition unit.

In ACT 116, the processor 4011 waits for the instruction to display the list screen.

When the customer wants to change the quantity of the commodity registered as the purchase commodity, the customer executes a predetermined operation for the change. The operation is, for example, an operation of the touch panel 4016 for designating the commodity registered as the purchase commodity and designating the quantity after changing the commodity.

When an operation of designating the above-described change in quantity is executed in a state where the processor 4011 is in the wait state of ACT 111 to ACT 114, the processor 4011 determines YES in ACT 112 and the process proceeds to ACT 117 in FIG. 10.

In ACT 117, the processor 4011 determines whether or not the designated number is 0. When the designated number is not 0, the processor 4011 determines NO and the process proceeds to ACT 118.

In ACT 118, the processor 4011 requests the mobile controller 3 to change the quantity. The processor 4011 causes the request data to be transmitted to include specific data for specifying the commodity having the designated quantity and the designated number. The specific data may be a commodity code or may be specific data for specifying the purchase commodity only in the mobile controller 3, for example, a number for identifying each of the purchase commodities in the purchase commodity list.

When the designated number is 0, the processor 4011 determines YES in ACT 117 and the process proceeds to ACT 119.

In ACT 119, the processor 4011 displays a deletion screen on the touch panel 4016. The deletion screen is a screen that notifies the customer that a commodity having a designated quantity of 0 is deleted from the purchase commodities. The deletion screen includes a deletion button for designating deletion, and a return button for returning the change in quantity to the state before the designation where the quantity is not changed.

In ACT 120, the processor 4011 determines whether or not deletion is designated. When not, the processor 4011 determines NO and the process proceeds to ACT 121.

In ACT 121, the processor 4011 determines whether or not return is designated. When not, the processor 4011 determines NO and the process proceeds to ACT 120.

Thus, in ACT 120 and ACT 121, the processor 4011 waits for the designation of a deletion or a return.

When the customer wants to cancel the deletion and to return the change in quantity to the state before the designation, the customer designates the return in accordance with a predetermined operation of, for example, touching the return button on the deletion screen. Accordingly, the processor 4011 determines YES in ACT 121 and the process returns to ACT 110 in FIG. 9. In this case, the registered states of the purchase commodities do not change, and thus the processor 4011 displays the list screen SCB in the same state as that displayed before displaying the deletion screen again on the touch panel 4016.

When the customer clearly wants the deletion, the customer designates the deletion in accordance with a predetermined operation of, for example, touching the deletion button on the deletion screen. Accordingly, the processor 4011 determines YES in ACT 120 and the process proceeds to ACT 122.

In ACT 122, the processor 4011 requests the mobile controller 3 to execute the deletion. The processor 4011 causes the request data to be transmitted to include the specific data for specifying the commodity that is designated to be deleted.

The process proceeds to ACT 123 after the processor 4011 requests the change in quantity in ACT 118 or requests the deletion in ACT 122.

In ACT 123, the processor 4011 waits for the instruction of the display of the list screen.

Further, the processor 31 in the mobile controller 3 proceeds to processing in ACT 205 after notifying the check-in completion in ACT 204 in FIG. 14.

In ACT 205, the processor 31 determines whether or not a change in purchase commodities is requested. When not, the processor 31 determines NO and the process proceeds to ACT 206.

In ACT 206, the processor 31 determines whether or not the deletion of the purchase commodity is requested. When not, the processor 31 determines NO and the process proceeds to ACT 207.

In ACT 207, the processor 31 determines whether or not checkout is requested. When not, the processor 31 determines NO and the process proceeds to ACT 205.

Thus, in ACT 205 to ACT 207, the processor 31 waits for the request of any one of a change, a deletion, or a checkout.

When any one of the registration, the change in quantity, or the deletion is requested from the cart terminal 400 as described above, the processor 31 determines YES in ACT 205 and the process proceeds to ACT 208.

In ACT 208, the processor 31 transmits the request from the cart terminal 400 to the virtual POS server 2 along with the notification of the transaction code of the transaction to be processed. At this time, the processor 31 may transmit the request data transmitted from the cart terminal 400 to the virtual POS server 2 as it is or after converting the request data through some process. The processor 31 notifies barcode data or specific data in the request data transmitted from the cart terminal 400 to the virtual POS server 2.

When the request data regarding the registration, the change in quantity, or the deletion is transmitted from the mobile controller 3 in a state where the processor 21 in the virtual POS server 2 is in the wait state of ACT 302 to ACT 306 in FIG. 16, the processor 21 determines YES in ACT 302 and the process proceeds to ACT 307.

In ACT 307, the processor 21 updates the transaction database DBBA in response to the request of the transmitted request data. For example, when the registration is requested, the processor 21 assumes that the barcode data in the request data is read by a barcode scanner provided in an existing POS terminal and attempts the registration of the purchase commodity through the same process as that in the existing POS terminal. However, there may be a case where the commodity code represented by the barcode data is not registered in the commodity database due to some reason. In addition, there may be a case where a barcode different from that representing the commodity code may also be displayed on the commodity. In these cases, the processor 21 outputs an error without registering the purchase commodity. This way, the processor 21 registers the purchase commodity based on the result of reading the normal barcode. For example, when the change in quantity is requested, the processor 21 changes the quantity previously recorded in the transaction database DBBA regarding the commodity of which the quantity is to be changed. For example, when the deletion is requested, the processor 21 updates the transaction database DBBA such that the target commodity is excluded from the purchase commodities.

In ACT 308, the processor 21 transmits result data regarding the result of the above-described process to the mobile controller 3. When the purchase commodity is appropriately registered, the processor 21 causes the result data to include identification data for identifying the normal registration notification and a commodity code, a commodity name, and a price of the registered commodity. When the quantity is changed, the processor 21 causes the result data to include a changed commodity code of the commodity and the quantity after the change. When the purchase commodity is deleted, the processor 21 causes the result data to include a commodity code of a commodity excluded from the purchase commodities. In addition, when the processor 21 outputs an error, the processor 21 causes the result data to include identification data for identifying the error notification and barcode data transmitted in response to the registration request. After completion of the transmission of the result data, the processor 21 returns to the wait state of ACT 302 to ACT 306.

The processor 31 in the mobile controller 3 proceeds to processing in ACT 209 after transmitting the request in ACT 208 in FIG. 14.

In ACT 209, the processor 31 acquires the result data transmitted from the virtual POS server 2 as described above. The processor 31 stores the acquired result data in the main memory 32 or the auxiliary storage unit 33.

In ACT 210, the processor 31 updates the registration database DBCB based on the result data. The update of the registration database DBCB is executed, for example, as follows.

First case: a case where normal registration is notified and a data record DRCB correlating to a transaction to be processed does not include registration data including a notified commodity code.

In this case, the processor 31 adds a new field to an area next to the final field previously present in the data record DRCB correlating to the transaction to be processed, and adds new registration data to this field. The processor 31 causes the new registration data to include the notified commodity code, an error flag of "0" representing that there is no error, a notified commodity name, a notified price, a quantity of "1", and a cancellation flag of "0" representing that the commodity is not canceled. Thus, the registration data added in this case has a structure illustrated on the upper right side of FIG. 6.

Second case: a case where normal registration is notified and a data record DRCB correlating to a transaction to be processed includes registration data including a notified commodity code; however, a cancellation flag of the registration data is "1" representing that the commodity is cancelled.

In this case, the processor 31 executes the same process as that of the first case.

Third case: a case where normal registration is notified, a data record DRCB correlating to a transaction to be processed includes registration data including a notified commodity code, and a cancellation flag of the registration data is "0".

In this case, the processor 31 replaces a value of the quantity in the registration data including the notified commodity code and the cancellation flag of "0" with a value that is more than the value by 1.

Fourth case: a case where a change in quantity is notified.

In this case, the processor 31 detects registration data including a notified commodity code from the data record DRCB correlating to the transaction to be processed. The processor 31 replaces the quantity in the registration data with the quantity in the result data.

Fifth case: a case where deletion is notified.

In this case, the processor 31 detects registration data including a notified commodity code from the data record DRCB correlating to the transaction to be processed. The processor 31 changes the cancellation flag in the registration data to "1".

Sixth case: a case where an error is notified.

In this case, the processor 31 adds a new field to an area next to the final field previously present in the data record DRCB correlating to the transaction to be processed, and adds new registration data to this field. The processor 31 causes the new registration data to include notified barcode data and an error flag of "1" representing an error. Thus, the registration data added in this case has a structure illustrated on the lower right side of FIG. 6.

This way, the registration database DBCB that is updated by the processor 31 displays a list of purchase commodities registered in the virtual POS server 2 and records the results of reading barcodes causing errors.

By storing the barcode data transmitted in response to the registration request in advance in the main memory 32 or the auxiliary storage unit 33, the processor 31 may cause the registration data to include the stored barcode data in the sixth case. In this case, the processor 21 in the virtual POS server 2 does not have to cause the result data to include the barcode data. In addition, the processor 31 may extract a commodity code from the stored barcode data such that the first case to the fifth case are processed based on the commodity code. In addition, the processor 31 may acquire a commodity name and a price from the shop server 1 or the like based on the commodity code.

In ACT 211, the processor 31 instructs the cart terminal 400 to display the list screen. For example, the processor 31 transmits instruction data including identification data for identifying the list screen display instruction to the cart terminal 400 through the in-shop communication network 7 and the access point 6. The processor 31 causes the instruction data to include a commodity code, a commodity name, a price, and a quantity in the data record DRCB correlating to a transaction to be processed in the registration database DBCB. In addition, when there is an error in the current registration, the processor 31 causes the instruction data to include error data representing the error. Next, the processor 31 returns to the wait state of ACT 205 to ACT 207.

Various instructions from the mobile controller 3 to the cart terminal 400 described below are implemented by transmitting the instruction data including identification data for identifying the reason for the instruction from the mobile controller 3 to the cart terminal 400 through the in-shop communication network 7 and the access point 6 as described above.

In any one of the first case to the third case and the sixth case, when the instruction data for instructing the display of the list screen is received by the wireless communication unit 4015 in the cart terminal 400, the processor 4011 determines YES in ACT 116 in FIG. 10. In the fourth case or the fifth case, when the instruction data for instructing the display of the list screen is received by the wireless communication unit 4015, the processor 4011 determines YES in ACT 123. In these cases, the processor 4011 returns to processing in ACT 110 in FIG. 9 and displays the list screen SCB on the touch panel 4016. At this time, the processor 4011 causes the list screen SCB to display commodity names, prices, and quantities of purchase commodities in the instruction data. In addition, when the instruction data includes error data, the processor 4011 adds and displays registration failure to and on the list screen SCB.

When the customer wants to cancel all the previously registered purchase commodities and to stop shopping, the customer designates the stop by executing a predetermined operation of, for example, touching the button BUBC on the list screen SCB. Accordingly, the processor 4011 determines YES in ACT 113 in FIG. 9 and the process proceeds to ACT 124 in FIG. 10.

In ACT 124, the processor 4011 displays a cancellation screen on the touch panel 4016. The cancellation screen is a screen for notifying the customer that all the previously registered purchase commodities are to be cancelled. The cancellation screen includes an execution button for designating cancelation execution and a return button for returning the change in quantity to the state before the designation where the quantity is not changed.

In ACT 125, the processor 4011 determines whether or not cancellation execution is designated. When not, the processor 4011 determines NO and the process proceeds to ACT 126.

In ACT 126, the processor 4011 determines whether or not return is designated. When not, the processor 4011 determines NO and the process proceeds to ACT 125.

Thus, in ACT 125 and ACT 126, the processor 4011 waits for the designation of the cancellation execution or the return.

When the customer wants to continue shopping as it is, the customer designates the return by executing a predetermined operation of, for example, touching the return button on the cancellation screen. Accordingly, the processor 4011 determines YES in ACT 126, returns to the processing in ACT 110 in FIG. 9, and displays the list screen SCB on the touch panel 4016 again. In this case, the registered states of the purchase commodities do not change, and thus the processor 4011 displays the list screen SCB in the same state as that displayed before displaying the cancellation screen again on the touch panel 4016.

When the customer wants to stop shopping, the customer designates the cancellation execution by executing a predetermined operation of, for example, touching the execution button on the cancellation screen. As a result, the processor 4011 determines YES in ACT 125 and the process proceeds to ACT 127.

In ACT 127, the processor 4011 requests the mobile controller 3 to execute cancelation.

When the cancellation is requested from the cart terminal 400 as described above, the processor 31 in the mobile controller 3 determines YES in ACT 206 in FIG. 14 and the process proceeds to ACT 212.

In ACT 212, the processor 31 transmits the cancellation request to the virtual POS server 2 along with the notification of the transaction code of the transaction to be processed. At this time, the processor 31 may transmit the request data transmitted from the cart terminal 400 to the virtual POS server 2 as it is or after converting the request data through some process.

When the request data regarding the cancellation is transmitted from the mobile controller 3 in a state where the processor 21 in the virtual POS server 2 is in the wait state of ACT 302 to ACT 306 in FIG. 16, the processor 21 determines YES in ACT 303 and the process proceeds to ACT 309.

In ACT 309, the processor 21 updates the transaction database DBBA in response to the request of the transmitted request data. For example, the processor 21 assumes that the request in the request data transmitted from the mobile controller 3 is the cancellation instruction input through an input device provided in an existing POS terminal, and updates the transaction database DBBA through the same process as that of the existing POS terminal such that all the registered commodities correlating to a notified transaction code are excluded from the purchase commodities.

In ACT 310, the processor 21 transmits result data regarding the result of the above-described process to the mobile controller 3. The processor 21 causes the result data to include commodity codes of all the commodities excluded from the purchase commodities. After completion of the transmission of the result data, the processor 21 returns to the wait state of ACT 302 to ACT 306.

The processor 31 in the mobile controller 3 proceeds to processing in ACT 213 after transmitting the request in ACT 212 in FIG. 14.

In ACT 213, the processor 31 acquires the result data transmitted from the virtual POS server 2 as described above. The processor 31 stores the acquired result data in the main memory 32 or the auxiliary storage unit 33.

In ACT 214, the processor 31 updates the registration database DBCB based on the result data. That is, the processor 31 changes the cancellation flag from "0" to "1" for all the registration data in the data records DRCB correlating to the transaction to be processed.

In ACT 215, the processor 31 notifies the cancellation to the user terminal 300. Next, the processor 31 returns to the wait state of ACT 205 to ACT 207.

Further, the processor 4011 in the cart terminal 400 proceeds to ACT 128 after requesting the cancellation in ACT 127 in FIG. 10.

In ACT 128, the processor 4011 waits for the notification of the cancellation from the mobile controller 3. When the cancellation is notified as described above, the processor 4011 determines YES and the process returns to ACT 101 in FIG. 9.

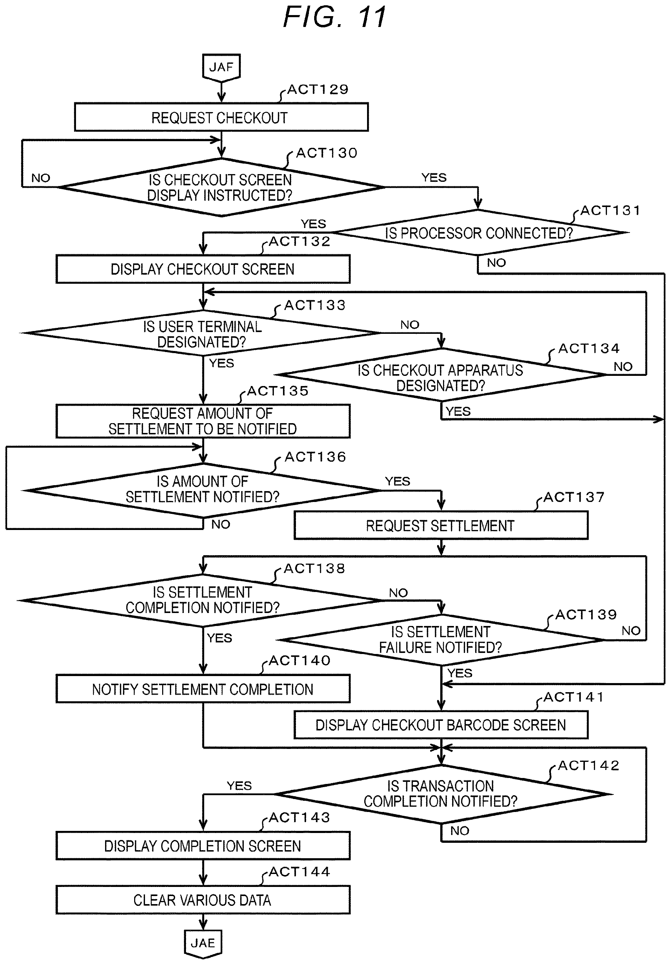

When the customer ends registering all the commodities that the customer wants to purchase as the purchase commodities, the customer proceeds to settlement. At this time, the customer designates checkout start by executing a predetermined operation of, for example, touching the button BUBB on the list screen SCB. Accordingly, the processor 4011 determines YES in ACT 114 in FIG. 9 and the process proceeds to ACT 129 in FIG. 11.

In ACT 129, the processor 4011 requests the mobile controller 3 to execute checkout. The processor 4011 causes the request data to be transmitted to include the terminal code.

In ACT 130, the processor 4011 waits for instruction of the display of a checkout screen.

When the checkout is requested from the cart terminal 400 as described above, the processor 31 in the mobile controller 3 determines YES in ACT 207 in FIG. 14 and the process proceeds to ACT 216 in FIG. 15.

In ACT 216, the processor 31 instructs the cart terminal 400 to display the checkout screen.

When the display of the checkout screen is instructed as described above, the processor 4011 in the cart terminal 400 determines YES in ACT 130 in FIG. 11 and the process proceeds to ACT 131.

In ACT 131, the processor 4011 determines whether or not the processor 4011 is connected to the user terminal 300. When the processor 4011 is connected to the user terminal 300, the processor 4011 determines YES and the process proceeds to ACT 132.

In ACT 132, the processor 4011 displays the checkout screen on the touch panel 304. The checkout screen is a screen for allowing the customer to select any one of operations of the user terminal 300 or the checkout apparatus 5 for the settlement of the price.

FIG. 19 illustrates an example of a checkout screen SCC.

The checkout screen SCC includes a display area ARCA, a message MECA, and buttons BUCA and BUCB. The display area ARCA displays the total number of purchase commodities and the total sum of the prices of the purchase commodities. The message MECA is a character message for causing the customer to designate any one of operations of the user terminal 300 or the checkout apparatus 5 for the settlement of the price. The button BUCA is a soft key for the customer to designate the user terminal 300. The button BUCB is a soft key for the customer to designate the checkout apparatus 5 to execute the operation.

In ACT 133, the processor 4011 determines whether or not the user terminal 300 is designated. When not, the processor 4011 determines NO and the process proceeds to ACT 134.

In ACT 134, the processor 4011 determines whether or not the checkout apparatus 5 is designated. When not, the processor 4011 determines NO and the process proceeds to ACT 133.

Thus, in ACT 133 and ACT 134, the processor 4011 waits for the designation of the user terminal 300 or the checkout apparatus 5.

When the customer wants to execute the settlement of the price using the user terminal 300, the customer designates the user terminal 300 by executing a predetermined operation of, for example, touching the button BUCA. Accordingly, the processor 4011 determines YES in ACT 133 and the process proceeds to ACT 135.

In ACT 135, the processor 4011 requests the mobile controller 3 to notify the amount of settlement.

The processor 31 in the mobile controller 3 proceeds to processing in ACT 217 after instructing the display of the checkout screen in ACT 216 in FIG. 15.

In ACT 217, the processor 31 determines whether or not the notification of the amount of settlement is requested. When not, the processor 31 determines NO and the process proceeds to ACT 218.

In ACT 218, the processor 31 determines whether or not transaction completion is notified. When not, the processor 31 determines NO and the process proceeds to ACT 217.

Thus, in ACT 217 and ACT 218, the processor 31 waits for the request of a notification of the amount of settlement or a notification of the settlement completion. When the notification of the amount of settlement is requested from the cart terminal 400 as described above, the processor 31 determines YES in ACT 217 and the process proceeds to ACT 219.

In ACT 219, the processor 31 transmits the request of the notification of the amount of settlement to the virtual POS server 2 along with the notification of the transaction code of the transaction to be processed. At this time, the processor 31 may transmit the request data transmitted from the cart terminal 400 to the virtual POS server 2 as it is or after converting the request data through some process.

When the request data regarding the notification of the amount of settlement is transmitted from the mobile controller 3 in a state where the processor 21 in the virtual POS server 2 is in the wait state of ACT 302 to ACT 306 in FIG. 16, the processor 21 determines YES in ACT 304 and the process proceeds to ACT 311.

In ACT 311, the processor 21 calculates the amount of settlement regarding the transaction to be processed. The processor 21 calculates the price of a commodity registered in the purchase commodity based on, for example, the data record DRCB where the transaction code in the request data regarding the notification of the amount of settlement is set in the field FBA, and sets the price as the amount of settlement. For example, a specific process for calculating the amount of settlement may be the same as that executed in an existing POS terminal or the like.

In ACT 312, the processor 21 notifies the calculated amount of settlement to the mobile controller 3. Next, the processor 21 returns to the wait state of ACT 302 to ACT 306.

The processor 31 in the mobile controller 3 proceeds to processing in ACT 220 after transmitting the request in ACT 219 in FIG. 15.

In ACT 220, the processor 31 waits for the notification of the amount of settlement. When the amount of settlement is notified from the virtual POS server 2 as described above, the processor 31 determines YES and the process proceeds to ACT 221.

In ACT 221, the processor 31 notifies the amount of settlement notified from the virtual POS server 2 to the cart terminal 400.

The processor 4011 in the cart terminal 400 proceeds to processing in ACT 136 after requesting the notification of the amount of settlement in ACT 135 in FIG. 11.

In ACT 136, the processor 4011 waits for the notification of the amount of settlement. When the amount of settlement is notified from the mobile controller 3 as described above, the processor 4011 determines YES and the process proceeds to ACT 137.

In ACT 137, the processor 4011 requests the user terminal 300 to execute settlement. Specifically, the processor 4011 transmits request data for requesting the settlement to the user terminal 300 through wireless communication between the wireless communication unit 4014 and the wireless communication unit 306, the processor 4011 being capable of communicating with the user terminal 300 through the wireless communication unit 4014. The processor 4011 causes the request data for requesting the settlement to include the amount of settlement notified from the mobile controller 3.

Further, the processor 301 in the user terminal 300 proceeds to processing in ACT 152 after displaying the check-in screen in ACT 151 in FIG. 13.

In ACT 152, the processor 301 waits for completion of the wireless connection to the cart terminal 400. When the wireless connection between the wireless communication unit 306 and the wireless communication unit 4014 is established, the processor 301 determines YES and the process proceeds to ACT 153.

In ACT 153, the processor 301 determines whether or not the wireless connection is disconnected. When the wireless connection is maintained, the processor 301 determines NO and the process proceeds to ACT 154.

In ACT 154, the processor 301 determines whether or not the settlement is requested. When not, the processor 301 determines NO and the process proceeds to ACT 153.

Thus, in ACT 153 and ACT 154, the processor 301 waits for the disconnection of the wireless connection or the request of the settlement. When the request data for requesting the settlement transmitted from the cart terminal 400 is received by the wireless communication unit 306 as described above, the processor 301 determines YES in ACT 154 and the process proceeds to ACT 155. At this time, the processor 301 stores the received request data in the main memory 302 or the auxiliary storage unit 303. The request data includes the amount of settlement and thus corresponds to the amount-of-settlement data. Thus, by the processor 301 executing the information processing based on the membership certificate application APDA, a computer including the processor 301 as a central part functions as the second acquisition unit.

In ACT 155, the processor 301 determines whether or not settlement data that is registered in the user terminal 300 and stored in the main memory 4012 or the auxiliary storage unit 4013 in response to the request of the customer is present as described above. When the settlement data is present, the processor 301 determines YES and the process proceeds to ACT 156.

In ACT 156, the processor 301 determines whether or not the amount of settlement that is requested to be settled can be settled using the settlement data stored in the main memory 4012 or the auxiliary storage unit 4013. Specifically, the processor 301 determines whether or not the amount of settlement and the settlement data match a predetermined condition. When a plurality of conditions are determined, the processor 301 determines whether or not the amount of settlement and the settlement data match each of the conditions. The processor 301 determines whether or not the settlement can be executed based on the determination result. The above-described condition is determined by, for example, a settlement agency depending on the settlement method. That is, the above-described condition is, for example, whether or not the electronic money balance is more than the amount of settlement regarding the electronic money. In addition, a condition that is preset by the customer may be included in the above-described conditions. For example, when a setting where the input of a pass code is required prior to the settlement is made by the customer, whether or not a normal pass code is input by an operation on the touch panel 304 is included as one of the above-described conditions. When the settlement can be executed, the processor 301 determines YES and the process proceed to ACT 157.

In ACT 157, the processor 301 executes the settlement process for electronic settlement of the amount of settlement requested to be settled using the settlement data stored in the main memory 4012 or the auxiliary storage unit 4013. As the settlement process, a well-known process for electronic settlement using a smartphone or the like can be adopted as it is. For example, the processor 301 executes a process for online settlement using settlement data for credit card settlement while communicating with the settlement server 500 through the communication network 600. Alternatively, for example, the processor 301 executes a process for online settlement of appropriating the electronic money balance represented by settlement data stored in an IC chip for electronic money. After completion of the settlement, the process proceeds to ACT 158. Thus, by the processor 301 executing the information processing based on the membership certificate application APDA, a computer including the processor 301 as a central part functions as the settlement unit.

In ACT 158, the processor 301 notifies the settlement completion to the cart terminal 400. For example, the processor 31 transmits notification data for notifying the settlement completion to the cart terminal 400 through wireless communication between the wireless communication unit 306 and the wireless communication unit 4014. Next, the process proceeds to ACT 160. Thus, by the processor 301 executing the information processing based on the membership certificate application APDA, a computer including the processor 301 as a central part functions as the transmission unit.

When the settlement data is not stored in the main memory 4012 or the auxiliary storage unit 4013, the processor 301 and the settlement cannot be executed in ACT 155, the processor 301 determines NO in ACT 156 and the process proceeds to ACT 159.

In ACT 159, the processor 301 notifies the settlement failure to the cart terminal 400. For example, the processor 31 transmits notification data for notifying the settlement failure to the cart terminal 400 through wireless communication between the wireless communication unit 306 and the wireless communication unit 4014. In this case, the processor 301 proceeds to processing in ACT 160 without executing processing in ACT 157 and ACT 158.

In ACT 160, the processor 301 waits for the disconnection of the wireless connection from the cart terminal 400. When the wireless communication between the wireless communication unit 306 and the wireless communication unit 4014 is disconnected, the processor 301 determines YES and the process returns to ACT 151. When the wireless communication between the wireless communication unit 306 and the wireless communication unit 4014 is disconnected in a state where the processor 301 is in the wait state of ACT 153 and ACT 154, the processor 301 determines YES in ACT153 and the process returns to ACT 151.

The wireless communication between the wireless communication unit 306 and the wireless communication unit 4014 is disconnected by the wireless communication unit 306 under the control of the processor 301, for example, in response to the instruction by the customer in the user terminal 300. The wireless communication between the wireless communication unit 306 and the wireless communication unit 4014 is disconnected by the wireless communication unit 306 under the control of the processor 301, for example, in response to completion of ACT 158 or ACT 159. The wireless communication between the wireless communication unit 306 and the wireless communication unit 4014 is disconnected by the wireless communication unit 4014 under the control of the processor 4011, for example, in response to the instruction by the customer in the cart terminal 400. The wireless communication between the wireless communication unit 306 and the wireless communication unit 4014 is disconnected by the wireless communication unit 4014 under the control of the processor 4011, for example, in response to completion of the process regarding the transaction in the cart terminal 400. The process in the processor 301 or the processor 4011 for disconnecting the wireless communication between the wireless communication unit 306 and the wireless communication unit 4014 is not illustrated in the drawings.

The processor 4011 in the cart terminal 400 proceeds to processing in ACT 138 after requesting the settlement in ACT 137 in Fig. 11.

In ACT 138, the processor 4011 determines whether or not settlement completion has been notified. If the settlement completion notification has not been received, the processor 4011 determines NO and the process proceeds to ACT 139.

In ACT 139, the processor 4011 determines whether or not settlement failure has been notified. If the settlement failure notification has not been received, the processor 4011 determines NO and the process returns to ACT 138.

Thus, in ACT 138 and ACT 139, the processor 4011 waits for either the notification of the settlement completion or the settlement failure.

When the settlement completion has been notified from the user terminal 300 as described above, the processor 4011 determines YES in ACT 138 and the process proceeds to ACT 140.

In ACT 140, the processor 4011 notifies the settlement completion to the mobile controller 3. The processor 4011 transmits, for example, notification data for notifying the settlement completion to the mobile controller 3 through the access point 6 and the in-shop communication network 7.

The processor 31 in the mobile controller 3 proceeds to processing in ACT 222 after notifying the amount of settlement in ACT 221 in FIG. 15.

In ACT 222, the processor 31 waits for the notification of the settlement completion. When the settlement complement is notified from the cart terminal 400 as described above, the processor 31 determines YES and the process proceeds ACT 223.

In ACT 223, the processor 31 notifies the settlement completion to the virtual POS server 2.

The processor 21 in the virtual POS server 2 returns to the wait state of ACT 302 to ACT 306 after notifying the amount of settlement in ACT 312 in FIG. 16. Therefore, when the settlement completion is notified as described above, the processor 21 determines YES in ACT 305 and the process proceeds to ACT 313 in FIG. 17.

In ACT 313, the processor 21 updates the transaction database DBBA such that the management of the transaction to be processed ends. For example, the processor 21 deletes a data record including a transaction code of the transaction to be processed from the transaction database DBBA.

In ACT 314, the processor 21 notifies transaction completion to the mobile controller 3. Through the above-described processes, the processor 21 ends the transaction process.

When the customer wants to execute the settlement of the price using the checkout apparatus 5, the customer designates the checkout apparatus 5 by executing a predetermined operation of, for example, touching the button BUCB on the checkout screen SCC displayed on the touch panel 4016 of the cart terminal 400. Accordingly, the processor 4011 determines YES in ACT 134 in FIG. 11, and the process proceeds to ACT 141.

When the processor 4011 is instructed to display the checkout screen from the mobile controller 3 but is not connected to the user terminal 300, the processor 4011 determines NO in ACT 131 and the process proceeds to ACT 141. In this case, even when the user terminal 300 is designated, the settlement cannot be executed using the user terminal 300. Therefore, the processor 4011 selects settlement using the checkout apparatus 5. As a result, troublesomeness of the customer for selecting the checkout apparatus 5 again can be reduced. When the processor 4011 attempts to establish wireless connection to the user terminal 300 and is connected to the user terminal 300, the processor 4011 may proceed to processing in ACT 132.

In addition, when the user terminal 300 is requested to execute the settlement but the settlement failure has been notified from the user terminal 300, the processor 4011 determines YES in ACT 139 and the process proceeds to ACT 141. In this case, since the settlement cannot be executed using the user terminal 300, the processor 4011 selects the settlement using the checkout apparatus 5 again. As a result, troublesomeness of the customer for selecting the checkout apparatus 5 again can be reduced.

In ACT 141, the processor 4011 displays a checkout barcode screen on the touch panel 4016. The checkout barcode screen is a screen displaying a checkout barcode representing data required for the checkout apparatus 5 to acquire data regarding the content of the transaction from the virtual POS server 2. The processor 4011 acquires the checkout barcode from the virtual POS server 2 through the mobile controller 3 and displays the checkout barcode on the checkout barcode screen.

The customer causes the scanner in the checkout apparatus 5 that is not used by another customer to read the checkout barcode. Accordingly, the checkout apparatus 5 requests the virtual POS server 2 to transmit settlement data in accordance with data represented by the checkout barcode. For example, the checkout apparatus 5 transmits request data including a transaction code in the data represented by the checkout barcode to the virtual POS server 2.

When request data for the transmission request including the transaction code of the transaction to be processed is received in a state where the processor 21 in the virtual POS server 2 is in the wait state of ACT 302 to ACT 306 illustrated in FIG. 16, the processor 21 determines YES in ACT 306 and the process proceeds to ACT 315 in FIG. 17.

In ACT 315, the processor 21 transmits checkout data that represents the content of the transaction to be processed and is required for the checkout in the checkout apparatus 5 to the checkout apparatus 5 that requests transmission. For example, the checkout data may be the same data as data that is transmitted from a registration apparatus to a checkout apparatus in an existing semi-self-service-type transaction processing system.

In ACT 316, the processor 21 waits for completion of the settlement in the checkout apparatus 5 to which the checkout data is transmitted as described above.

After receiving the checkout data transmitted from the virtual POS server 2, the checkout apparatus 5 executes the settlement of the price of the transaction in accordance with an operation of an operator. In addition, optionally, the checkout apparatus 5 dispenses various printed matter such as a receipt or a coupon. After completion of the settlement, the checkout apparatus 5 notifies the completion to the virtual POS server 2. Accordingly, the processor 21 in the virtual POS server 2 determines YES in ACT 316 and the process proceeds to ACT 317.

In ACT 317, the processor 21 updates the transaction database DBBA such that the management of the transaction to be processed ends. For example, the processor 21 deletes a data record including a transaction code of the transaction to be processed from the transaction database DBBA.

In ACT 318, the processor 21 notifies transaction completion to the mobile controller 3. Through the above-described processes, the processor 21 ends the transaction process.

The processor 31 in the mobile controller 3 proceeds to processing in ACT 224 after notifying the settlement completion in ACT 223 in FIG.15.

In ACT 224, the processor 31 waits for the notification of the transaction completion. When the processor 21 in the virtual POS server 2 notifies the transaction completion in ACT 314 in FIG. 17 as described above, the processor 31 is in the wait state of ACT 224.

On the other hand, when the processor 21 in the virtual POS server 2 notifies the transaction completion in ACT 318 in FIG. 17 as described above, the processor 31 is in the wait state of ACT 217 and ACT 218 in FIG. 15.

Thus, the processor 31 determines YES in ACT 224 in FIG. 15 for the notification of the transaction completion in ACT 314 in FIG. 17, determines YES in ACT 218 in FIG. 15 for the notification of the transaction completion in ACT 318 in FIG. 17, and the process proceeds to ACT 225.

In ACT 225, the processor 31 notifies the transaction completion to the cart terminal 400.

In ACT 226, the processor 31 clears various data that are temporarily stored in the main memory 302 or the auxiliary storage unit 303 in the relay process. At this time, the processor 31 may delete the data record DRCB correlating to the transaction to be processed from the transaction management database DBCA or may remain without being deleted. Through the above-described processes, the processor 31 ends the relay process.

The processor 4011 in the cart terminal 400 proceeds to processing in ACT 142 after notifying the settlement completion in ACT 140 in FIG. 11 and displaying the checkout barcode screen in ACT 141.

In ACT 142, the processor 4011 waits for the notification of the transaction completion. When the transaction completion is notified from the mobile controller 3 as described above, the processor 4011 determines YES and the process proceeds to ACT 143.

In ACT 143, the processor 4011 displays a completion screen on the touch panel 4016. The completion screen is a screen for notifying the transaction completion to the customer.

The customer checks the completion screen and declares the completion by executing a predetermined operation of, for example, touching a button displayed on the completion screen. Accordingly, the process proceeds to ACT 144. After the elapsed time in the state where the completion screen is displayed reaches a predetermined period of time, the processor 4011 may proceed to processing in ACT 144.

In ACT 144, the processor 4011 clears various data that are temporarily stored in the main memory 4012 or the auxiliary storage unit 4013 in the UI process. Next, the process returns to ACT 101 in FIG. 9.

As described above, in the transaction processing system according to the embodiment, the cart terminal 400 recognizes the user terminal 300 using direct communication with the user terminal 300. For the price of the purchase commodity registered in the cart terminal 400, the user terminal 300 that is identified in response to the request from the cart terminal 400 executes the settlement process for electronic settlement using the settlement data acquired in the user terminal 300 in accordance with the designation in the cart terminal 400. As a result, the settlement can be completed in accordance with an operation of the customer without input of the settlement data to the cart terminal 400 used by unspecified customers while allowing the customer to register the content of the transaction using the cart terminal 400.

In addition, in the transaction processing system according to the embodiment, the user terminal 300 acquires the amount of settlement from the cart terminal 400 using direct communication with the cart terminal 400. As a result, the customer does not have to execute a special operation of acquiring the amount of settlement for the user terminal 300.

In addition, in the transaction processing system according to the embodiment, the cart terminal 400 receives the notification of the settlement completion from the user terminal 300 using direct communication with the user terminal 300. As a result, the customer does not have to execute a special operation of acquiring the notification of the settlement completion for the cart terminal 400.

The above embodiment can be modified as follows in various ways.

The amount-of-settlement data may be any applicable data as long as the processor 301 in the user terminal 300 can determine the amount of settlement. For example, the amount-of-settlement data may include the data record in the transaction database DBBA or the data record DRCB in the registration database DBCB. The processor 301 may calculate the amount of settlement based on the data records.

The processor 301 in the user terminal 300 that receives the settlement request may acquire the settlement data, for example, in accordance with an operation of the customer without storing the settlement data in the main memory 302 or the auxiliary storage unit 303.

One of at least the notification of the amount of settlement from the cart terminal 400 to the user terminal 300 and the notification of the settlement completion from the user terminal 300 to the cart terminal 400 may be executed through another communication other than the wireless communication between the wireless communication unit 306 and the wireless communication unit 4014, or may be executed using a method other than communication, for example, using a method of displaying and reading a two-dimensional code.

The user terminal 300 notifies the cart terminal 400 of whether or not the settlement data is registered during the check-in so that in a case where the processor 4011 in the cart terminal 400 determines YES in ACT 114 in FIG. 9, when the settlement data is already registered, the processor 4011 may proceed to processing in ACT 131 or ACT 135, and when the settlement data is not registered, the process may proceed to ACT 141.

When communication with a communication terminal belonging to the customer can be established without executing the user authentication during the check-in, the communication terminal may be identified as the user terminal 300.

The process for the wireless connection between the user terminal 300 and the cart terminal 400 may start from the user terminal 300. For example, a barcode that represents a check-in code including predetermined connection data for establishing the wireless connection with the wireless communication unit 4014 may be displayed on the touch panel 4016 of the cart terminal 400, or may be provided on a label attached to the cart terminal 400 or the shopping cart 700. The processor 301 acquires the check-in code from an image acquired by imaging the barcode using the camera 305 and instructs the wireless communication unit 306 to establish connection in accordance with the connection data in the check-in code.

The virtual POS server 2 may directly receive a request from the user terminal 300 and the cart terminal 400 without providing the mobile controller 3.

A plurality of virtual POS servers 2 may be provided such that a plurality of transaction processes are distributed to the virtual POS servers 2 and executed by the virtual POS servers 2. In addition, one transaction process may be distributed to a plurality of information processing apparatuses and processed by the information processing apparatuses. For example, the process for the registration of purchase commodities and the process for the settlement may be executed by different information processing apparatuses.

The transaction to be processed by the transaction processing system is not limited to sales of commodities displayed in a shop and may be a transaction in another form where, for example, food and drink is prepared and provided.

A mobile terminal of the user may be used without being attached to the shopping cart 700 instead of the cart terminal 400, and this terminal and the cart terminal 400 may be mixed.

A part or all of the respective functions that are implemented by the processor 11, 21, 31, 301, or 4011 through the information processing can also be implemented by hardware that executes information processing not based on a program, for example, a logic circuit. In addition, each of the respective functions can also be implemented by a combination of the hardware such as a logic circuit and a software control.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the scope of the inventions. The accompanying claims and their equivalents are intended to cover such embodiments or modifications as would fall within the scope of the invention.

## Claims

1. A transaction processing system, comprising:
a first wireless terminal in which payment information associated with a customer is stored; and
a shopping cart with a code reader and a second wireless terminal, wherein
the second wireless terminal is configured to:
transmit a commodity code read by the code reader to a server system to generate, on the server system, a shopping list including the commodity code;
receive, from the server system, payment amount data indicating a total payment amount due for purchase of commodities on the shopping list; and
transmit a settlement instruction along with the payment amount data to the first wireless terminal for performing a settlement operation with a settlement server using the payment information stored in the first wireless terminal.

2. The transaction processing system according to claim 1, wherein the second wireless terminal includes a display and is configured to display on the display a screen to select a settlement method from options including a first settlement using the first wireless terminal and a second settlement without using the first wireless terminal, and transmit the settlement instruction when the first settlement is selected.

3. The transaction processing system according to claim 2, wherein
the shopping list is associated with a transaction ID, and
the second wireless terminal is further configured to display, on the display, a code symbol representing the transaction ID when the second settlement is selected.

4. The transaction processing system according to claim 3, further comprising a checkout kiosk configured to read the code symbol displayed on the display and perform a settlement operation with the settlement server using the transaction ID obtained from the read code symbol.

5. The transaction processing system according to claim 1, wherein the first wireless terminal is configured to transmit to the second wireless terminal a notification indicating whether the settlement operation is complete.

6. The transaction processing system according to claim 5, wherein
the shopping list is associated with a transaction ID, and
the second wireless terminal includes a display and is further configured to display, on the display, a code symbol representing the transaction ID when the notification indicates that the settlement operation is not complete.

7. The transaction processing system according to claim 5 or 6, wherein the second wireless terminal is further configured to cause the server system to close the shopping list when the notification indicates that the settlement operation is complete.

8. The transaction processing system according to any one of claims 1 to 7, wherein
the first wireless terminal includes a display and configured to display, on the display, a code symbol representing a check-in code to establish a wireless connection with the second wireless terminal, and
the second wireless terminal is configured to obtain the check-in code from the displayed code symbol read by the code reader and establish the wireless connection to the first wireless terminal using the check-in code.

9. The transaction processing system according to any one of claims 1 to 7, wherein
the second wireless terminal includes a display and is configured to display, on the display, a code symbol representing a check-in code to establish a wireless connection with the first wireless terminal, and
the first wireless terminal includes a camera and is configured to establish the wireless connection with the second wireless terminal using the check-in code obtained from an image of the displayed code symbol captured by the camera.

10. The transaction processing system according to any one of claims 1 to 9, wherein the second wireless terminal includes a first wireless communication interface configured to perform wireless communication with the server system according to a first wireless communication protocol and a second wireless communication interface configured to perform wireless communication with the first wireless terminal according to a second wireless communication protocol that supports a shorter communication range than the first wireless communication protocol.

11. A transaction processing method using a system including a first wireless terminal in which payment information associated with a customer is stored and a shopping cart with a code reader and a second wireless terminal, the method comprising:
transmitting, with the second wireless terminal, a commodity code read by the code reader to a server system to generate a shopping list including the commodity code;
receiving payment amount data from the server system via the second wireless terminal, the payment amount data indicating a total payment amount due for purchase of commodities on the shopping list; and
transmitting, from the second wireless terminal, a settlement instruction along with the payment amount data to the first wireless terminal for performing a settlement operation using the payment information stored in the first wireless terminal.

12. The transaction processing method according to claim 11, wherein
the second wireless terminal includes a display, and
the method further comprises displaying on the display a screen to select a settlement method from options including a first settlement using the first wireless terminal and a second settlement without using the first wireless terminal, wherein the settlement instruction is transmitted when the first settlement is selected.

13. The transaction processing method according to claim 12, wherein
the shopping list is associated with a transaction ID, and
the method further comprises displaying on the display a code symbol representing the transaction ID when the second settlement is selected.

14. The transaction processing method according to claim 13, wherein
the system further includes a checkout kiosk provided in a store; and
the method further comprises by the checkout kiosk: reading the code symbol displayed on the display and performing a settlement operation with the settlement server using the transaction ID obtained from the read code symbol.

15. The transaction processing method according to claim 11, further comprising transmitting from the first wireless terminal to the second wireless terminal a notification indicating whether or not the settlement operation is complete.
